# EUROPEAN PATENT APPLICATION

(11) **EP 4 776 688 A1**
(43) Date of publication of application: **15.07.2026**
(21) Application number: 25227417.0
(22) Date of filing: 29.12.2025
(51) Int. Cl.: H04W 36/00

(54) **INDICATING SWITCHING MODE FOR UPLINK TRANSMIT SWITCHING**

(30) Priority: 08.01.2025 FI 20255010
(71) Applicant: Nokia Solutions and Networks Oy, 02610 Espoo (FI)
(72) Inventor: PANDEY, Brijesh Chander, Bangalore (IN); BUDAMA, Sree Charan Teja Reddy, Bangalore (IN); KERAHALLI, Swetha Kumari, Bangalore (IN); BEDEKAR, Anand, Glenview (US); URIE, Alistair, Issy les Moulineaux (FR)
(74) Representative: Nokia EPO representatives

(57) **Abstract**

Disclosed is a method comprising generating an indication indicating a switching mode to be applied at a user equipment for uplink transmit switching, wherein the switching mode is based at least on a predicted throughput of the user equipment on a primary cell and on one or more secondary cells of the user equipment; and transmitting the indication to the user equipment.

## Description

### FIELD

The following example embodiments relate to wireless communication.

### BACKGROUND

Uplink transmit switching is a multi-carrier technology that enables dual-stream transmission by flexible switching of a user device's transmit chains.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising means for causing the apparatus to perform at least: generating an indication indicating a switching mode to be applied at a user equipment for uplink transmit switching, wherein the switching mode is based at least on a predicted throughput of the user equipment on a primary cell and on one or more secondary cells of the user equipment; and transmitting the indication to the user equipment.

According to a second aspect, there is provided the apparatus of the first aspect, wherein the means further cause the apparatus to perform: collecting a set of input data for determining the predicted throughput of the user equipment on the primary cell and on the one or more secondary cells, wherein the set of input data comprises at least: one or more scheduler-related metrics, pathloss information associated with the user equipment, a multiple-input and multiple-output rank of the user equipment on the primary cell and on the one or more secondary cells, one or more power headroom reports associated with the user equipment, measurement information associated with one or more sounding reference signals transmitted from the user equipment, and one or more beam identifiers of one or more beams serving the user equipment.

According to a third aspect, there is provided the apparatus of the second aspect, wherein the one or more scheduler-related metrics comprise at least one of: one or more metrics related to a proportional fair scheduling algorithm, a number of users in time-domain scheduling, or a number of users in frequency-domain scheduling.

According to a fourth aspect, there is provided the apparatus of the second or third aspect, wherein the means further cause the apparatus to perform: determining whether one or more pre-defined conditions for collecting the set of input data are fulfilled, wherein the set of input data is collected based on determining that the one or more pre-defined conditions are fulfilled, wherein the one or more pre-defined conditions comprise at least one of: receiving a sounding reference signal from the user equipment, or detecting a change in one or more parameters associated with a throughput of the user equipment.

According to a fifth aspect, there is provided the apparatus of any of the second to fourth aspects, wherein the means further cause the apparatus to perform: obtaining, based on the set of input data, information indicating the predicted throughput of the user equipment on the primary cell and on the one or more secondary cells; and determining, based at least on the information, the switching mode to be applied at the user equipment, wherein the indication is transmitted to the user equipment based on the determination.

According to a sixth aspect, there is provided the apparatus of the fifth aspect, wherein the information indicating the predicted throughput is obtained by using one or more machine learning models configured to predict, based on the set of input data, a throughput of the user equipment on the primary cell and on the one or more secondary cells.

According to a seventh aspect, there is provided the apparatus of the sixth aspect, wherein the one or more machine learning models comprise a first machine learning model and a second machine learning model, wherein the first machine learning model is configured to predict resource allocation information based at least on the one or more scheduler-related metrics, the pathloss information, and the multiple-input and multiple-output rank of the user equipment on at least one of the primary cell or the one or more secondary cells, wherein the second machine learning model is configured to predict the throughput of the user equipment based at least on the resource allocation information from the first machine learning model, the measurement information associated with the one or more sounding reference signals, the pathloss information, the multiple-input and multiple-output rank of the user equipment on at least one of the primary cell or the one or more secondary cells, the one or more power headroom reports, and the one or more beam identifiers.

According to an eighth aspect, there is provided the apparatus of the fifth aspect, wherein the means further cause the apparatus to perform: transmitting, to a near-real-time radio access network intelligent controller, the set of input data for determining the predicted throughput of the user equipment on the primary cell and on the one or more secondary cells, wherein the near-real-time radio access network intelligent controller comprises one or more machine learning models configured to predict, based on the set of input data, a throughput of the user equipment on the primary cell and on the one or more secondary cells, wherein the information indicating the predicted throughput is obtained by receiving the information from the near-real-time radio access network intelligent controller.

According to a ninth aspect, there is provided the apparatus of any of the second to fourth aspects, wherein the means further cause the apparatus to perform: transmitting, to a near-real-time radio access network intelligent controller, at least a part of the set of input data for determining the predicted throughput of the user equipment on the primary cell and on the one or more secondary cells, wherein the near-real-time radio access network intelligent controller comprises one or more machine learning models configured to predict, based on at least the part of the set of input data, a throughput of the user equipment on the primary cell and on the one or more secondary cells; and receiving, from the near-real-time radio access network intelligent controller, based on transmitting at least the part of the set of input data, a message indicating the switching mode to be applied at the user equipment, wherein the indication is transmitted to the user equipment based on the message received from the near-real-time radio access network intelligent controller.

According to a tenth aspect, there is provided the apparatus of any of the second to fourth aspects, wherein the means further cause the apparatus to perform: determining, during an initial period, based at least on the set of input data, a corresponding local throughput prediction of the user equipment on the primary cell and on the one or more secondary cells; obtaining measurement information indicating an observed throughput of the user equipment on the primary cell and on the one or more secondary cells; transmitting, to a near-real-time radio access network intelligent controller, the measurement information, the corresponding local throughput prediction, and the set of input data used to determine the corresponding local throughput prediction; receiving, from the near-real-time radio access network intelligent controller, a correction offset to be applied to one or more subsequent local throughput predictions; applying the correction offset to a subsequent local throughput prediction for determining the predicted throughput of the user equipment on the primary cell and on the one or more secondary cells; and determining the switching mode to be applied at the user equipment based at least on the predicted throughput to which the correction offset is applied.

According to an eleventh aspect, there is provided an apparatus comprising means for causing the apparatus to perform at least: receiving, from a network node, an indication indicating a switching mode to be applied at the apparatus for uplink transmit switching, wherein the switching mode is based at least on a predicted throughput of the apparatus on a primary cell and on one or more secondary cells of the apparatus; and applying the switching mode indicated by the indication.

According to a twelfth aspect, there is provided a method comprising generating an indication indicating a switching mode to be applied at a user equipment for uplink transmit switching, wherein the switching mode is based at least on a predicted throughput of the user equipment on a primary cell and on one or more secondary cells of the user equipment; and transmitting the indication to the user equipment.

According to a thirteenth aspect, there is provided a method performed by a user equipment, the method comprising: receiving, from a network node, an indication indicating a switching mode to be applied at the user equipment for uplink transmit switching, wherein the switching mode is based at least on a predicted throughput of the user equipment on a primary cell and on one or more secondary cells of the user equipment; and applying the switching mode indicated by the indication.

According to a fourteenth aspect, there is provided a computer program comprising instructions which, when executed by an apparatus, cause the apparatus to perform at least the following: generating an indication indicating a switching mode to be applied at a user equipment for uplink transmit switching, wherein the switching mode is based at least on a predicted throughput of the user equipment on a primary cell and on one or more secondary cells of the user equipment; and transmitting the indication to the user equipment.

According to a fifteenth aspect, there is provided a computer program comprising instructions which, when executed by an apparatus, cause the apparatus to perform at least the following: receiving, from a network node, an indication indicating a switching mode to be applied at the apparatus for uplink transmit switching, wherein the switching mode is based at least on a predicted throughput of the apparatus on a primary cell and on one or more secondary cells of the apparatus; and applying the switching mode indicated by the indication.

According to a sixteenth aspect, there is provided a system comprising at least a network node and a user equipment; wherein the network node comprises means for causing the network node to perform at least: generating an indication indicating a switching mode to be applied at the user equipment for uplink transmit switching, wherein the switching mode is based at least on a predicted throughput of the user equipment on a primary cell and on one or more secondary cells of the user equipment; and transmitting the indication to the user equipment; wherein the user equipment comprises means for causing the user equipment to perform at least: receiving, from the network node, the indication indicating the switching mode to be applied at the user equipment; and applying the switching mode indicated by the indication.

### BRIEF DESCRIPTION OF THE DRAWINGS

In the following, various example embodiments will be described in greater detail with reference to the accompanying drawings, in which
FIG. 1A illustrates an example of a wireless communication network;
FIG. 1B illustrates an example of a system;
FIG. 2 illustrates coverage-based uplink transmit switching during overlapping uplink slots;
FIG. 3A illustrates a switched uplink option for uplink transmit switching;
FIG. 3B illustrates a dual uplink option for uplink transmit switching;
FIG. 4 illustrates an example of uplink transmit switching;
FIG. 5 illustrates a block diagram for switching mode selection;
FIG. 6 illustrates a throughput predictor internal to a distributed unit;
FIG. 7 illustrates a flow chart;
FIG. 8 illustrates an example of a system, where the throughput predictor is hosted at a near-real-time radio access network intelligent controller;
FIG. 9 illustrates a signal flow diagram;
FIG. 10 illustrates a signal flow diagram;
FIG. 11 illustrates a signal flow diagram;
FIG. 12 illustrates a signal flow diagram;
FIG. 13 illustrates a flow chart;
FIG. 14 illustrates a flow chart;
FIG. 15 illustrates a flow chart;
FIG. 16 illustrates an example of a single-model throughput predictor;
FIG. 17 illustrates an example of a dual-model throughput predictor;
FIG. 18 illustrates a flow diagram of an example embodiment for training a dual-model throughput predictor;
FIG. 19 illustrates an example of an artificial neural network;
FIG. 20 illustrates an example of a computational node;
FIG. 21 illustrates an example of an apparatus; and
FIG. 22 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

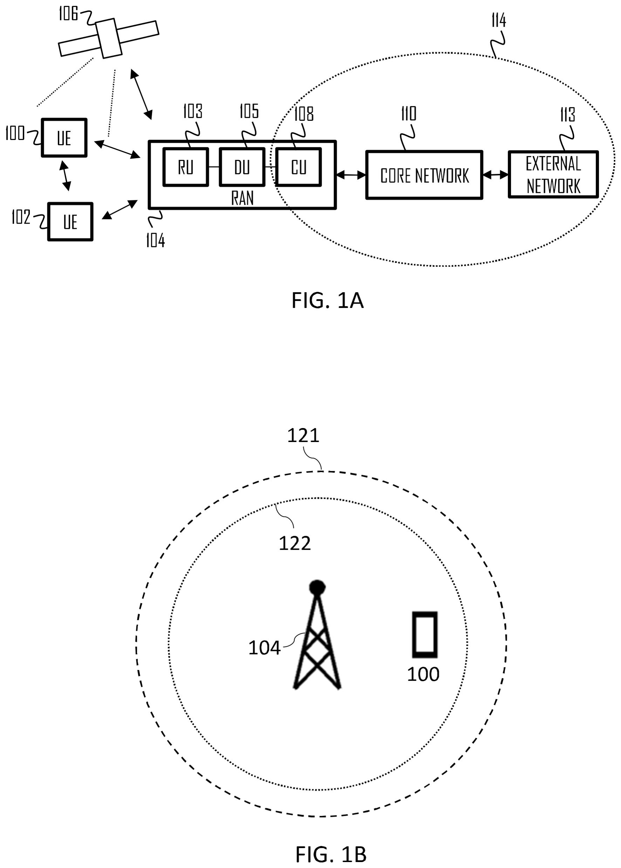

FIG. 1A depicts an example of a simplified wireless communication network showing some physical and logical entities. The connections shown in FIG. 1A may be physical connections or logical connections. It is apparent to a person skilled in the art that the wireless communication network may also comprise other physical and logical entities than those shown in FIG. 1A.

The example embodiments described herein are not, however, restricted to the wireless communication network given as an example but a person skilled in the art may apply the example embodiments described herein to other wireless communication networks provided with necessary properties.

The example wireless communication network shown in FIG. 1A includes a radio access network (RAN) and a core network 110.

FIG. 1A shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1A by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1A is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1A may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1A). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Carrier aggregation (CA) refers to a technology that enables a UE 100, 102 to simultaneously utilize multiple frequency bands or carriers to transmit and/or receive data. In carrier aggregation, two or more carriers operating on different frequencies or frequency bands may be aggregated together to create a wider "virtual" channel.

Carrier aggregation can significantly enhance throughput and coverage in both uplink and downlink by aggregating multiple carriers. However, CA in the uplink is more challenging compared to the downlink due to several technical and practical constraints, such as limited uplink transmission power, antenna constraints, battery consumption, complexity in network coordination, etc.

Another extension of CA to multiple RAN nodes is called dual connectivity (DC), wherein the UE 100 is connected to two RAN nodes, each of which handles its own set of cells (under CA). This allows more independent operation as well as improved reliability, since the failure of one RAN node does not necessarily mean failure of the entire UE connection.

FIG. 1B illustrates an example of a system, to which some example embodiments may be applied. FIG. 1B may be understood to depict a part of the wireless communication network of FIG. 1A, but with greater accuracy with respect to carrier aggregation.

Referring to FIG. 1B, the RAN node 104 (e.g., a gNB or DU) may provide a group of cells comprising a primary cell (PCell) 121 and one or more secondary cells (SCells) 122. The PCell 121 is a cell operating on a primary frequency that may be used for initial access. An SCell is a cell operating on a secondary frequency, which may be configured once an RRC connection is established, and which may be used to provide additional radio resources to the UE 100.

For example, carrier aggregation may involve combining the resources of the PCell 121 and the one or more SCells 122 to create a wider virtual channel. The UE 100 may treat this virtual channel as a single high-capacity connection. This allows the UE 100 to receive and transmit data across multiple frequency bands, effectively increasing the available bandwidth and data rates.

To enhance the uplink CA performance, the 3rd generation partnership project (3GPP) introduced the uplink (UL) transmit (Tx) switching feature in NR Release 16, which has been further enhanced in Release 17 and Release 18. Uplink Tx switching is a multi-carrier technology that enables dual-stream transmission by flexible switching of the UE's transmit chains. Dual-stream transmission is a MIMO technique for simultaneously transmitting two separate data streams over the same frequency band, doubling the data rate and enhancing throughput.

In Release 16, only one Tx chain could switch between two component carriers during uplink transmission, while the second Tx chain remained fixed. Release 17 significantly enhanced this capability by enabling both Tx chains to switch between the two component carriers. This enhancement improves the flexibility and efficiency of transmit chains, resulting in improved uplink throughput and overall system performance.

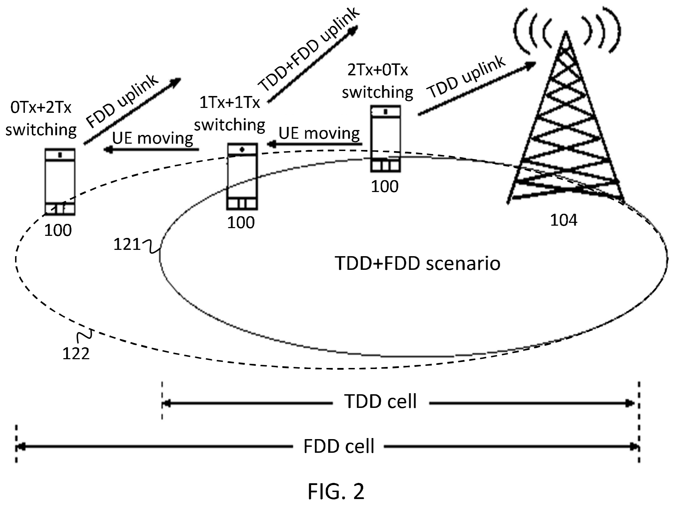

FIG. 2 illustrates coverage-based uplink Tx switching during overlapping uplink slots. FIG. 2 depicts the uplink Tx switching, which is based on the Release 17 specification. Although coverage-based UL Tx switching is shown in FIG. 2, there may be other possible reasons that could trigger UL Tx switching, such as available resources, load and/or UE capabilities.

In FIG. 2, the UE 100 is configured with two carriers: a time-division duplexing (TDD) carrier 121 and a frequency-division duplexing (FDD) carrier 122. Herein the terms "cell" and "carrier" may be used interchangeably. The FDD carrier 122 may have a larger coverage area than that of the TDD carrier 121.

When the UE 100 is at the center of the TDD cell 121 (i.e., having a stronger signal strength on the TDD cell 121), the UE 100 may use both of its antennas (or transmit chains) for the TDD cell 121, and zero antennas for the FDD cell 122. This is referred to as a 2Tx+0Tx switching mode. In this case, the UE 100 may transmit a physical uplink shared channel (PUSCH) only on the TDD carrier 121 (but not on the FDD carrier 122).

When the UE 100 moves further towards the edge of the TDD cell 121, it may have an equal signal strength on both carriers 121, 122, and the UE 100 may use one antenna (or transmit chain) for each carrier 121, 122. This is referred to as a 1Tx+1Tx switching mode. In this case, the UE 100 may transmit PUSCH on both the TDD carrier 121 and on the FDD carrier 122.

When the UE 100 moves beyond the coverage of the TDD cell 121, the UE 100 may use both of its antennas (or transmit chains) for the FDD cell 122, and zero antennas for the TDD cell 121. This is referred to as a 0Tx+2Tx switching mode. In this case, the UE 100 may transmit PUSCH only on the FDD carrier 122 (but not on the TDD carrier 121).

In wireless communication, time-division duplexing and frequency-division duplexing are two techniques used to separate uplink and downlink signals.

TDD uses the same frequency band for both uplink and downlink, but alternates between them in different time slots. This allows for dynamic allocation of bandwidth based on traffic demand, making it flexible and efficient for varying data loads.

FDD uses separate frequency bands for uplink and downlink, allowing simultaneous transmission and reception on these separate frequency bands. FDD helps to provide a constant and continuous data transmission experience, which is beneficial for applications requiring steady and predictable performance.

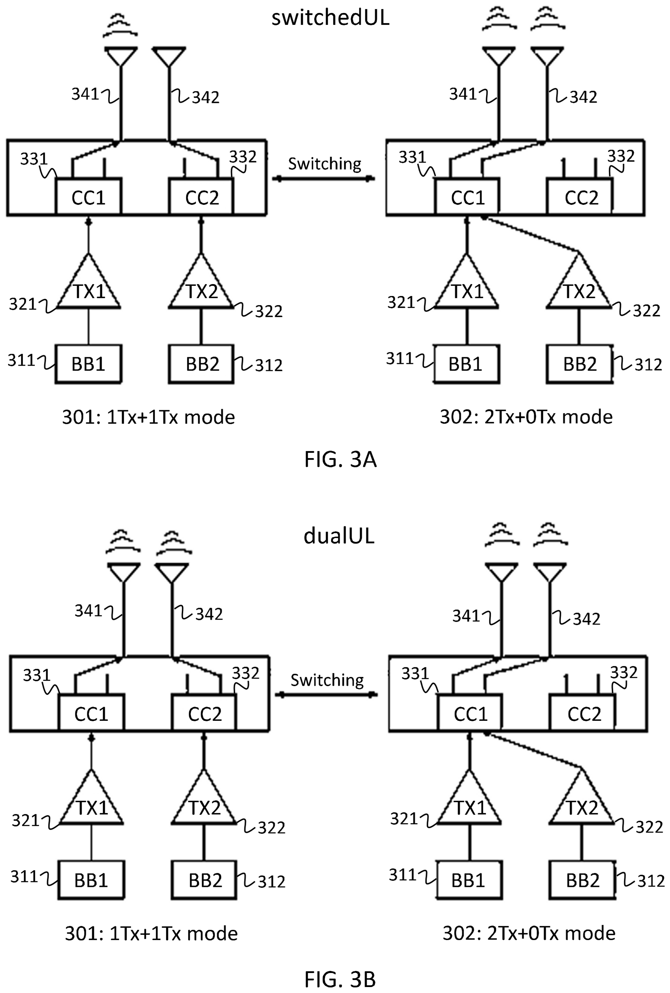

Uplink Tx switching can be categorized into switched uplink (switchedUL) and dual uplink (dualUL). Both of these options support dual-stream capabilities. switchedUL enables sequential transmission on different carriers (but does not support simultaneous transmission on both carriers), while dualUL allows for simultaneous transmission on both carriers when the dual stream is not possible. From the perspective of the scheduler, it is quite beneficial if a UE supports dualUL, since it gives more freedom to the scheduler. However, the support for dualUL depends on the UE capability. The uplink Tx switching in both options (switchedUL and dualUL) is shown in FIG. 3A and FIG. 3B.

FIG. 3A illustrates the switchedUL option, and FIG. 3B illustrates the dualUL option. In FIG. 3A and FIG. 3B, two modes of uplink Tx switching are shown: a 1Tx+1Tx switching mode 301 and a 2Tx+0Tx switching mode 302.

In FIG. 3A and FIG. 3B, two baseband (BB) units 311, 312, two transmission units (TX1 and TX2) 321, 322, two component carriers (CC) 331, 332, and two antennas 341, 342 are disclosed.

The baseband units 311, 312 are responsible for processing the digital signals before they are transmitted, handling tasks such as modulation, demodulation, encoding, decoding, and error correction.

The transmission units 321, 322 convert the processed digital signals from the baseband units 311, 312 into radio frequency signals for transmission over the air.

The component carriers 331, 332 refer to the individual frequency blocks used for transmitting the radio frequency signals.

The antennas 341, 342 (or transmit chains) refer to the final stages in the transmission process, where the radio frequency signals are transmitted through the antennas.

A switching mode refers to a configuration that determines how the transmit chains of a UE are connected among different component carriers. A transmit chain refers to the series of components and processes involved in transmitting a signal from the UE to the network. The transmit chain may include, for example, the antenna, power amplifiers, modulators, and other hardware and software elements that work together to transmit a signal over the air.

In the 1Tx+1Tx switching mode 301, each carrier 331, 332 uses one transmit chain 341, 342 for uplink transmission.

In the 2Tx+0Tx switching mode 302, the first carrier 331 (e.g., corresponding to the PCell 121) is utilizing two transmit chains 341, 342 for uplink transmission, enabling MIMO transmission. However, the second carrier 332 (e.g., corresponding to the SCell 122) is not using any transmit chain in the 2Tx+0Tx mode.

Another example of a switching mode is a 0Tx+2Tx switching mode, which means that the first carrier 331 is not using any transmit chain, whereas the second carrier 332 is utilizing two transmit chains 341, 342.

According to the current 3GPP specifications, if the UE 100, 102 is configured for uplink Tx switching, it must not transmit on any uplink carriers during the transition interval known as the switching period, during which the UE 100, 102 switches its antenna 342 from one carrier 332 to another carrier 331. As a result, some uplink symbols from one carrier are lost. Thus, the selection of the optimal switching mode is the key to optimizing the performance of the uplink Tx switching feature. Understanding the characteristics and implications of these switching modes is beneficial for optimizing network performance and choosing the most suitable switching mode based on the specific network conditions and/or requirements.

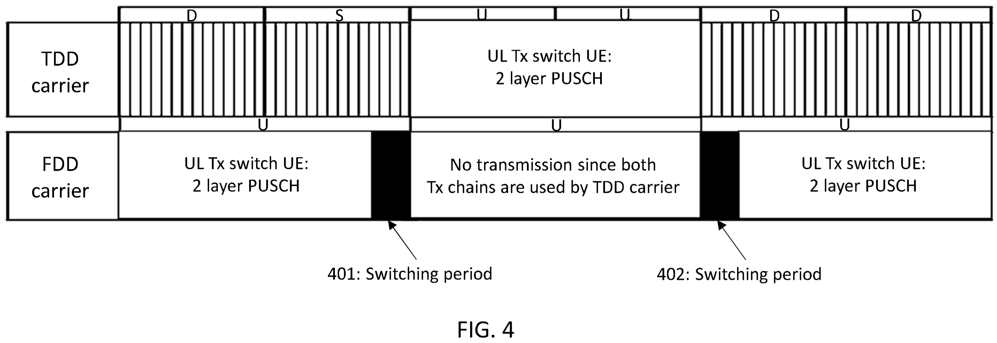

FIG. 4 illustrates TDD+FDD uplink Tx switching. In other words, FIG. 4 illustrates switching both of the UE antennas (or transmit chains) between the TDD carrier 121 and the FDD carrier 122. As described above, improvement in throughput performance due to uplink Tx switching comes at the cost of sacrificing some uplink symbols on a carrier during the switching period 401, 402. For example, in TDD+FDD uplink Tx switching, as shown in FIG. 4, switching from the 1Tx+1Tx switching mode to the 2Tx+0Tx switching mode (and vice versa) results in the loss of some uplink symbols on the FDD carrier due to the switching period 401, 402. This loss occurs regardless of any performance gains from using uplink Tx switching. The missing symbols not only impact the data rate, but also affect coverage. Therefore, finding the optimal switching mode is beneficial for maximizing the performance of the uplink Tx switching feature.

In FIG. 4, "D" refers to a downlink slot, "S" refers to a special slot, and "U" refers to an uplink slot. A slot is a unit of time.

The "2 layer PUSCH" refers to the physical uplink shared channel (PUSCH) using two transmission layers. This means that the UE 100, 102 can transmit data simultaneously on two separate layers, effectively doubling the data throughput compared to a single layer. This technique is part of MIMO technology.

Although 3GPP does not define specific techniques for dynamically switching between cells for uplink Tx switching, it provides a flexible framework that allows network operators and equipment vendors to implement various techniques to optimize uplink performance. The process of selecting a switching mode requires communication and coordination between the cells in the network and the UE to ensure efficient and effective switching. While selecting a switching mode for a UE 100, it may be beneficial to compare the UE's performance in the primary cell (PCell) 121 and on one or more secondary cells (SCells) 122. Based on the performance comparison, a switching mode (e.g., either the 1TX+1TX or 2Tx+0Tx switching mode) can be selected.

In carrier aggregation, the performance of the cells may be compared based on spectral efficiency. However, spectral efficiency alone is not an optimal criterion for selecting the switching mode in uplink Tx switching, because it does not account for the cell load and available physical resource blocks (PRBs) of each cell. PRBs are units of resources that can be assigned to UEs in a cellular network.

Throughput perceived by the UE may be a more appropriate criterion for uplink Tx switching mode selection, as it inherently includes the number of PRBs that the UE was served with (which depend on the cell load and bandwidth). However, calculating or predicting the UE's future throughput on a given carrier requires knowledge of the potential number of PRBs that may be allocated to the UE on that carrier (if the UE switched its transmission to that carrier), which is difficult to determine without prior scheduling. This is an issue with throughput-based switching mode selection in uplink Tx switching.

To address the above issue, some example embodiments may provide an uplink throughput predictor for the selection of switching mode in uplink Tx switching. For example, the throughput predictor may comprise an artificial intelligence (AI) or machine learning (ML) model configured (or trained) for predicting the future throughput of a given UE. Some example embodiments may be applicable to both the switchedUL and dualUL options described above.

For example, the throughput predictor may be used to predict what the throughput of the UE would be if scheduled on the TDD carrier 121, and what the throughput of the UE would be if scheduled on the FDD carrier 122. Based on these throughput predictions, the optimal switching mode may be selected and configured to the UE. This may prevent the loss of uplink symbols caused by the switching periods.

Network operators can dynamically adjust and optimize switching modes for each UE by using this predictor in the network's decision-making process. This adaptive approach enhances overall system performance and significantly improves the user experience. A throughput prediction model may be used to predict the throughput of the PCell 121 as well as one or more SCells 122, and a switching mode may then be selected based on the predicted throughput.

Some example embodiments are described below using principles and terminology of 5G radio access technology without limiting the example embodiments to 5G radio access technology, however.

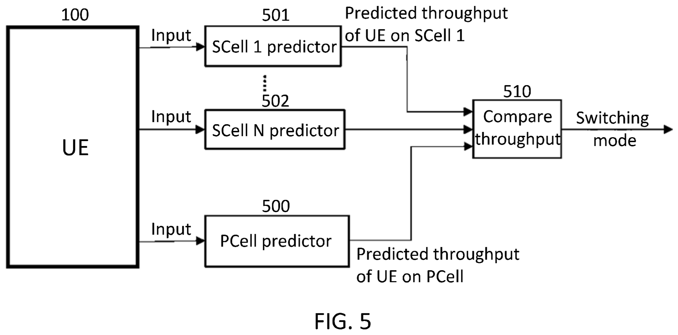

FIG. 5 illustrates a block diagram for switching mode selection based on a throughput prediction model.

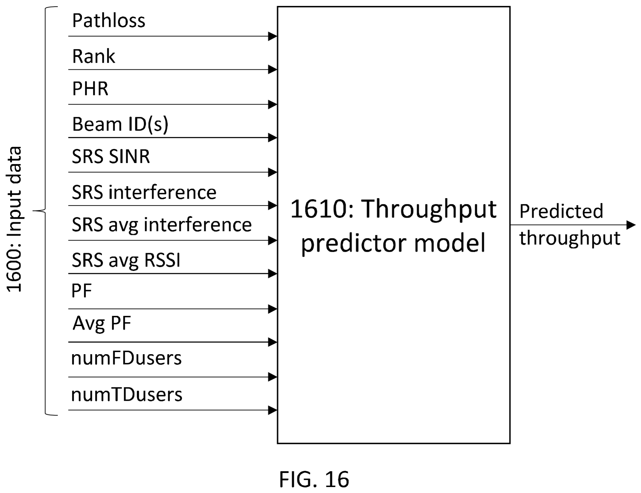

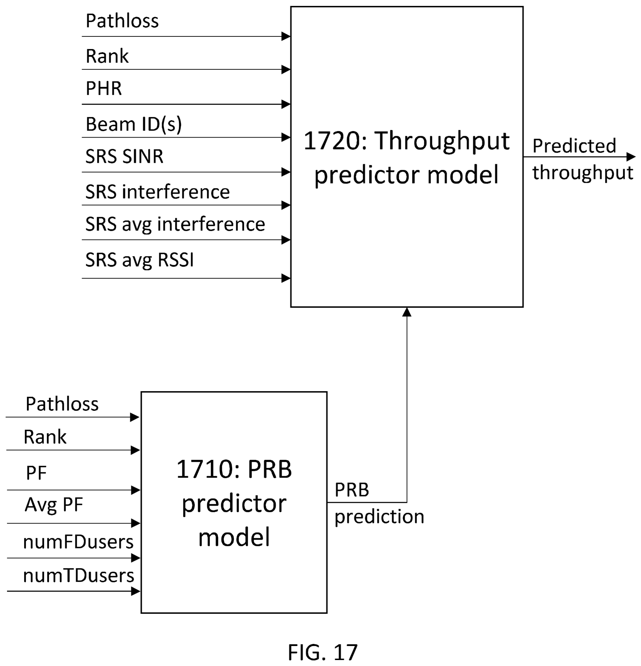

In FIG. 5, a UE 100, a throughput prediction model 500 for the PCell 121, and one or more throughput prediction models 501, 502 for one or more SCells 122 are disclosed. In other words, there may be a separate throughput prediction model for each SCell 121, 122. Some examples of the throughput prediction model are shown in FIG. 16 and FIG. 17.

Throughput refers to the rate or speed at which data is successfully transmitted over a communication channel. For example, throughput may be measured in bits per second (bps), kilobits per second (kbps), megabits per second (Mbps) or gigabits per second (Gbps).

Based on a set of input data associated with the UE 100, each throughput prediction model 500, 501, 502 predicts the throughput of the UE 100 on the corresponding cell 121, 122. In other words, the predicted throughput of the UE 100 on the corresponding cell 121, 122 is provided as the output of the throughput prediction model 500, 501, 502.

The set of input data may comprise, for example, at least one of: one or more scheduler-related metrics, pathloss information associated with the UE 100, a MIMO rank of the UE 100 on the primary cell 121 and on the one or more secondary cells 122, one or more power headroom reports (PHRs) associated with the UE 100, measurement information associated with one or more sounding reference signals transmitted from the UE 100, and one or more beam identifiers of one or more beams serving the UE 100.

In block 510, the predicted throughputs from each model 500, 501, 502 are compared, and a switching mode is selected for the UE 100 based on the comparison.

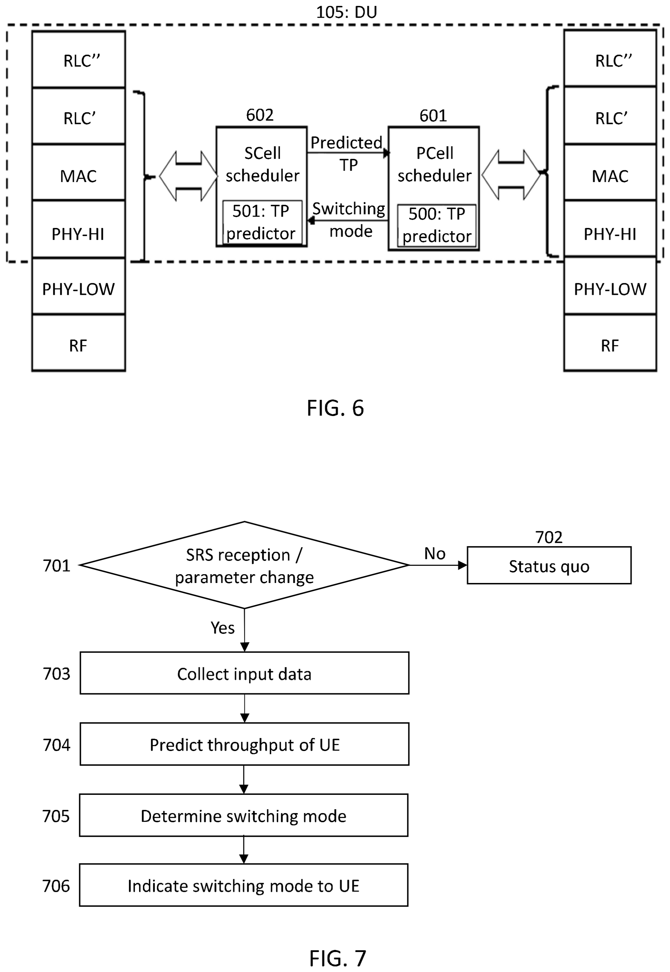

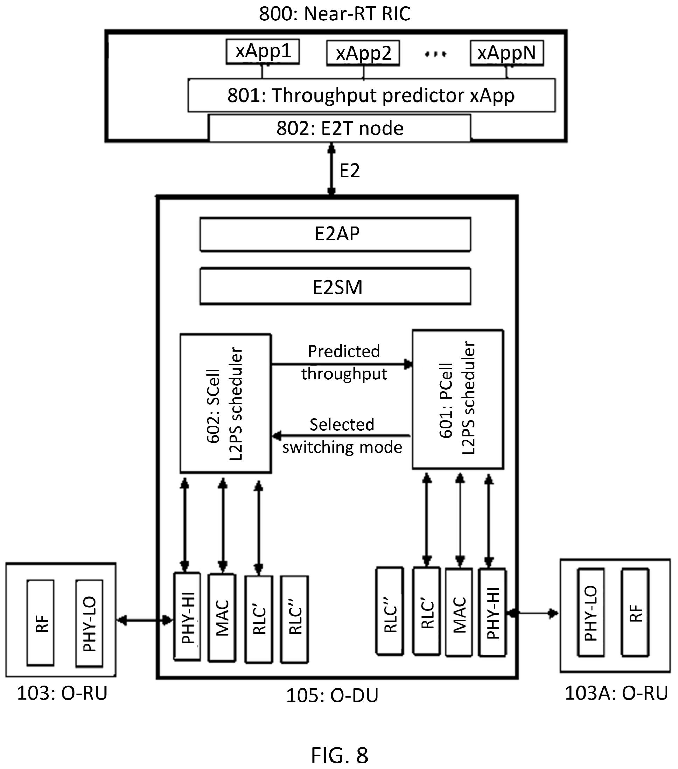

Regarding the placement of the throughput prediction model in a wireless communication system, there are at least two different options. In the first option, the throughput prediction model is internal to the base station 104 or DU 105 (see FIG. 6 and FIG. 7). The second option is applicable to the open radio access network (O-RAN) context (see FIGS. 8 to 12).

FIG. 6 illustrates an example of a throughput predictor 500, 501 internal to a DU 105. In this example, the throughput predictor 500 for the PCell 121 is located in the scheduler 601 of the PCell 121, and the throughput predictor 501 for an SCell 122 is located in the scheduler 602 of the SCell 122. The scheduler 602 of the SCell 122 may indicate the predicted throughput of the UE 100 on the SCell 122 (as determined by the SCell throughput predictor 501) to the scheduler 601 of the PCell 121. The scheduler 601 of the PCell 121 determines or selects the switching mode to be applied at the UE 100 based on the throughput predictions provided by the PCell throughput predictor 500 and the SCell throughput predictor 501. The scheduler 601 of the PCell 121 may indicate the selected switching mode to the scheduler 602 of the SCell 122, so that the scheduler 602 of the SCell 122 can allocate resources to the UE 100 accordingly.

It should be noted that some example embodiments are not limited to the split CU-DU architecture. In other words, some example embodiments may also be applied to a monolithic base station 104, in which case the throughput predictor 500, 501 is internal to the base station 104.

A monolithic base station refers to a base station that is implemented as a single, unified network node, without the functional splits seen in the split RAN architecture. In other words, in the monolithic architecture, all the functions, including control and user plane processing, are handled within one integrated unit, rather than being distributed across separate units, such as the CU and DU in the split architecture.

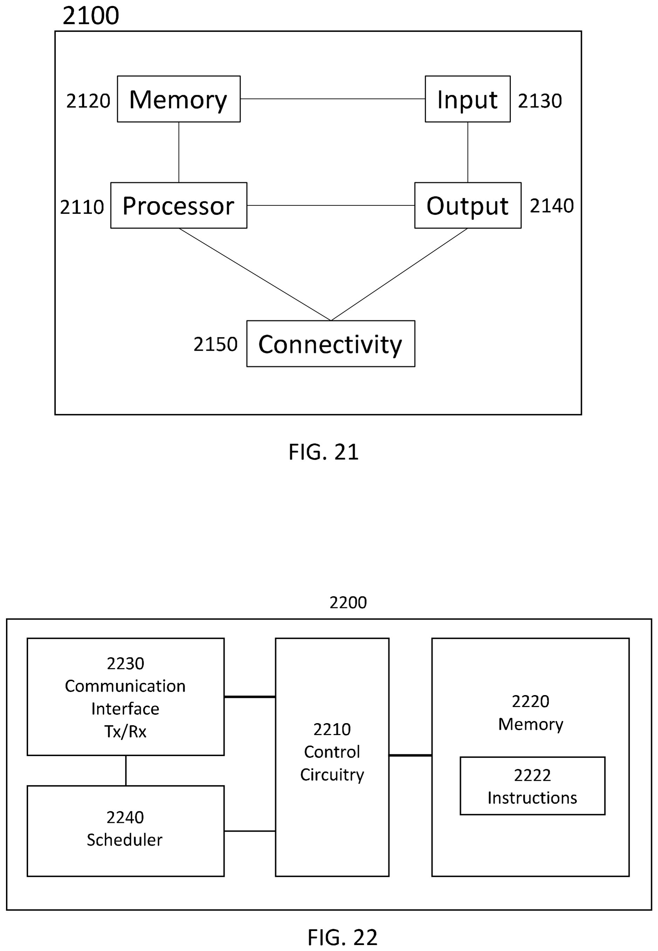

FIG. 7 illustrates a flow chart according to an example embodiment of a method for determining a switching mode to be applied at a user equipment 100 for uplink transmit switching. The method may be performed by an apparatus 2200 depicted in FIG. 22. For example, the apparatus 2200 may be, or comprise, or be comprised in, a distributed unit 105 (e.g., a scheduler 601 comprised in the DU 105) or a monolithic base station 104.

Referring to FIG. 7, in block 701, the apparatus 2200 (e.g., the DU 105 or scheduler 601) determines whether one or more pre-defined conditions are fulfilled for collecting a set of input data for determining a predicted throughput of a UE 100 on a primary cell 121 and on one or more secondary cells 122 of the UE 100.

For example, the one or more pre-defined conditions may comprise at least one of: receiving a sounding reference signal (SRS) from the UE 100, or detecting a change (e.g., a change above a threshold) in one or more parameters (e.g., PHR, rank, etc.) associated with or affecting a throughput of the UE 100.

The SRS is a type of reference signal that may be used in wireless communication systems to estimate the quality of the uplink channel. The SRS transmitted by the UE 100 may be measured by the DU 105 to obtain information about the channel conditions between the UE 100 and the DU 105.

In block 702, if the one or more pre-defined conditions are not fulfilled (block 701: no), then the status quo is maintained, i.e., no throughput predictions are performed in this case.

Alternatively, in block 703, based on determining that the one or more pre-defined conditions are fulfilled (block 701: yes), the apparatus 2200 collects the set of input data.

For example, when the SRS is received, or if there are some significant changes (e.g., a magnitude of the change is above a threshold) in at least one of the associated input parameters (e.g., PHR, rank, etc.) of the UE(s) 100, the DU 105 collects the recent input parameters of the UE(s) 100 on the PCell 121 and on the one or more SCells 122 that are required for the inference with the throughput predictor model(s) 500, 501.

The set of input data may comprise, for example, at least one of: one or more scheduler-related metrics, pathloss information associated with the UE 100, a MIMO rank of the UE 100 on the primary cell 121 and on the one or more secondary cells 122, one or more power headroom reports (PHRs) associated with the UE 100, measurement information associated with one or more sounding reference signals transmitted from the UE 100, and one or more beam identifiers of one or more beams serving the UE 100.

In block 704, based on the set of input data, the apparatus 2200 obtains information indicating the predicted throughput of the UE 100 on the primary cell 121 and on the one or more secondary cells 122. The information may be obtained by using one or more machine learning models (throughput predictor models 500, 501) that are configured (or trained) to predict, based on the set of input data, a throughput of the UE 100 on the primary cell 121 and on the one or more secondary cells 122.

In other words, the DU 105 may provide the input parameters to the throughput prediction model(s) 500, 501, which then predict the throughputs of the UE(s) 100 on the PCell 121 and on the one or more SCells 122.

In block 705, the apparatus 2200 determines, based at least on the throughput prediction information, a switching mode to be applied at the UE 100.

In block 706, based on the determination, the apparatus 2200 generates and transmits, to the UE 100, an indication (or a message) indicating the determined switching mode to be applied at the UE 100 for uplink transmit switching. As described above, the switching mode is based at least on the predicted throughput of the UE 100 on the primary cell 121 and on the one or more secondary cells 122 of the UE 100.

For example, the PCell 121 (or the scheduler 601 of the PCell 121) may make the switching mode selection decision for the UE(s) 100 based on the predicted throughputs, and indicate the switching mode decision to the UE(s) 100. For example, switching mode decision may be indicated to the UE(s) 100 via downlink control information (DCI), while allocating resources for the UE(s) 100. The DU 105 (or the scheduler 601 of the PCell 121) may also inform the decision to the SCell(s) 122 (or to the scheduler 602 of the SCell 122).

In the following, regarding the second option (i.e., the O-RAN context), various examples are described for the placement and usage of the throughput prediction model, as well as its interactions with the O-RAN DU 105 and xApp(s). However, some example embodiments are not limited to these examples, and there may also be other possibilities for the placement of the throughput prediction model.

FIG. 8 illustrates an example of a system, where the throughput predictor 801 is hosted in an xApp at a near-real-time (near-RT) radio access network intelligent controller (RIC) 800.

The near-RT RIC 800 is a component of the O-RAN architecture, which provides near-real-time control and optimization of the RAN by managing network resources and performance within a time frame of 10 milliseconds to one second, for example. This allows for dynamic adjustments to network conditions, improving efficiency and user experience.

The near-RT RIC 800 may communicate with one or more E2 nodes (e.g., an O-DU 105) through the E2 interface for time-sensitive near-real-time management and control of radio resources, such as interference management, handover management, Quality of Service (QoS) management, and radio connection management. An E2 termination (E2T) node 802 in the near-RT RIC 800 is responsible for terminating the E2 interface.

The O-DU 105 refers to an O-RAN distributed unit that handles real-time Layer 1 (L1) and Layer 2 (L2) functions, such as baseband processing and scheduling. The O-DU 105 works in conjunction with the O-RAN radio unit (O-RU) 103, 103A and O-RAN central unit (O-CU) 108 to provide a flexible and scalable network infrastructure. The O-DU 105 may correspond to the DU 105 of FIG. 1.

The throughput predictor 801 may be implemented as an xApp hosted in the near-RT RIC 800. The throughput predictor xApp 801 may comprise a machine learning model configured (or trained) to predict the throughput of the UE(s) 100 on the PCell 121 and on one or more SCells 122.

The near-RT RIC 800 may also host one or more other xApps. An xAPP is a software application running on the near-RT RIC 800 that performs a specific function through the E2 interface. xAPPs may be designed to perform specific functions related to the optimization and control of the RAN in near real-time (e.g., within a time frame of 10 milliseconds to 1 second). For example, the one or more other xApps may handle tasks such as handover optimization, interference management, load balancing, and/or traffic steering.

The E2 interface functions may be realized through E2 application protocol (E2AP) procedures. RIC services may be carried by using, for example, subscription, indication, control and query E2AP procedures. The near-RT RIC services may be mapped to logical RAN functions on the E2 node(s) and described according to E2 service models (E2SM).

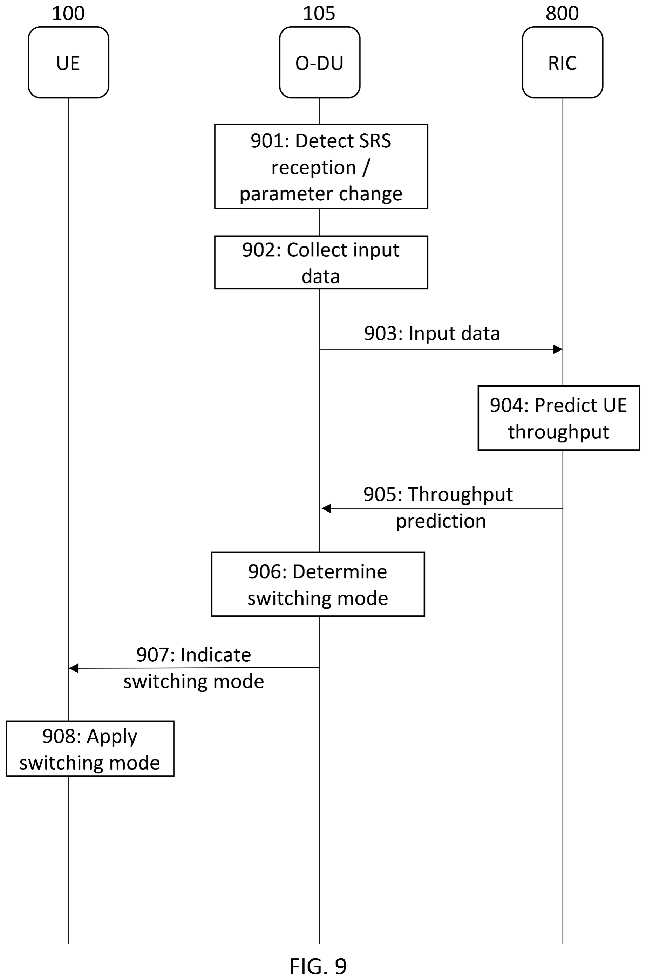

FIG. 9 illustrates a signal flow diagram according to an example embodiment of a RIC assist method based on the system of FIG. 8. In this example embodiment, the throughput predictor xApp 801 plays an assisting role in finalizing the switching mode decision.

Referring to FIG. 9, at 901, the O-DU 105 determines that one or more pre-defined conditions are fulfilled for collecting a set of input data for determining a predicted throughput of a UE 100 on a primary cell 121 and on one or more secondary cells 122 of the UE 100.

For example, the one or more pre-defined conditions may comprise at least one of: receiving a sounding reference signal from the UE 100, or detecting a change (or a change above a threshold) in one or more parameters associated with a throughput of the UE 100.

At 902, based on determining that the one or more pre-defined conditions are fulfilled (e.g., after SRS reception or observing parameter changes of the UE 100), the O-DU 105 collects the set of input data for the UE 100 on the PCell 121 and on the one or more SCells 122. The contents of the set of input data are described above with reference to FIG. 7.

At 903, the O-DU 105 transmits the set of input data to the near-RT RIC 800 through the E2 interface. The near-RT RIC 800 receives the set of input data. The O-DU 105 may request inference assistance from the throughput predictor xApp 801 for predicting the throughput of the UE 100 on the PCell 121 and on the one or more SCells 122.

In the case of parameter changes, the O-DU 105 may report only the updated parameters instead of the full set of input data. The O-DU 105 may continue its operations with the current switching modes of the UE 100 until it receives the control message (comprising the throughput prediction) from the near-RT RIC 800.

At 904, the throughput predictor xApp 801 uses one or more machine learning models to predict, based on the set of input data, a throughput of the UE 100 on the primary cell 121 and on the one or more secondary cells 122. That is, the xApp 801, which hosts the throughput prediction model(s), processes the input data and predicts the throughput of the UE 100 on the PCell 121 and the throughput of the UE 100 on the one or more SCells 122.

In other words, the near-RT RIC 800 comprises one or more machine learning models configured to predict, based on the set of input data, a throughput of the UE 100 on the primary cell 121 and on the one or more secondary cells 122.

At 905, the near-RT RIC 800 transmits, to the O-DU 105, information indicating the predicted throughput of the UE 100 on the primary cell 121 and on the one or more secondary cells 122. The O-DU 105 receives the information. The information may be comprised in a response to the inference assistance request.

For example, the throughput predictor xApp 801 may transmit a control message comprising the predicted throughputs of the UE 100 to the O-DU 105 (or to the schedulers 601, 602 of the PCell 121 and the SCell 122). After receiving the control message from the xApp 801, the SCell 122 (or the scheduler 602 of the SCell 122) may share the predicted throughput to the PCell(s) 121 (or to the scheduler 601 of the PCell 121).

At 906, the O-DU 105 determines, based at least on the throughput prediction information for the PCell 121 and the one or more SCells 122, a switching mode to be applied at the UE 100. In other words, using the predicted throughputs of the UE 100 on the PCell 121 and SCell 122, the PCell 121 (or the scheduler 601 of the PCell 121) determines and updates the switching mode of the UE 100, and it may also communicate the switching mode decision to the SCell(s) 122 (or to the scheduler 602 of the SCell 122). Subsequently, the schedulers 601, 602 schedule resources for the UE 100 according to the updated switching mode.

At 907, based on the determination, the O-DU 105 generates and transmits, to the UE 100, an indication (or a message) indicating the determined switching mode to be applied at the UE 100 for uplink transmit switching. The UE 100 receives the indication. For example, the indication may be conveyed to the UE 100 in the DCI, in which the scheduled resources are indicated.

At 908, the UE 100 applies the indicated switching mode. As described above, the switching mode indicated to the UE 100 is based at least on the predicted throughput of the UE 100 on the primary cell 121 and on the one or more secondary cells 122 of the UE 100.

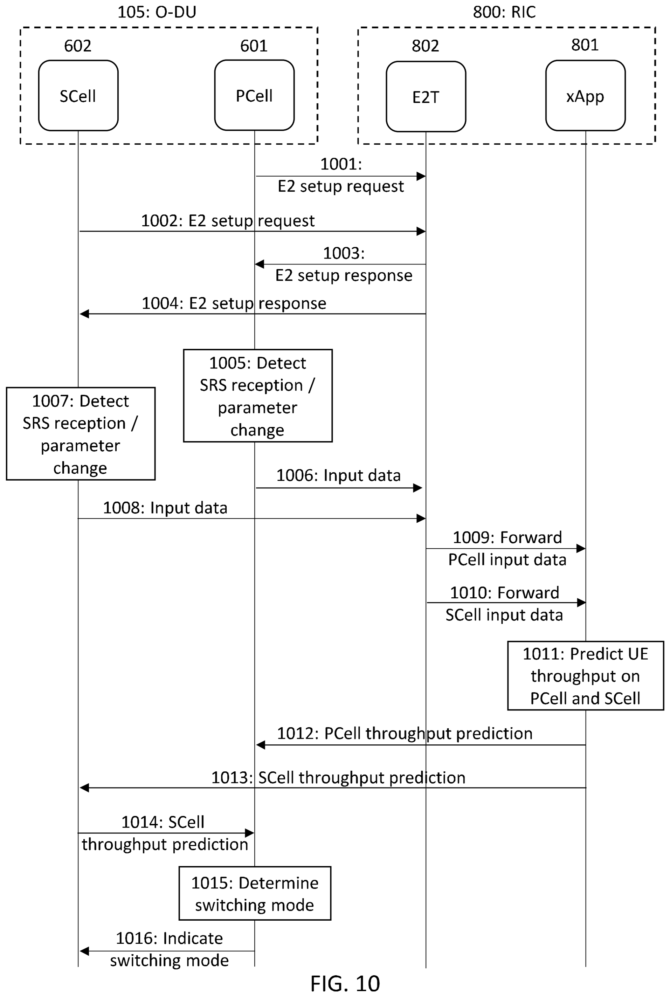

FIG. 10 illustrates a signal flow diagram according to an example embodiment of a RIC assist method based on the system of FIG. 8. Although only one SCell is shown in FIG. 10, it should be noted that the number of SCells may also be different than one. In other words, there may be one or more SCells. In addition, the signaling procedure illustrated in FIG. 10 may be extended and applied according to the actual number of SCells.

Referring to FIG. 10, at 1001, the scheduler 601 of the PCell 121 (which is comprised in the O-DU 105) transmits an E2 setup request message to the E2T node 802 of the near-RT RIC 800.

At 1002, the scheduler 602 of the SCell 122 (which is comprised in the O-DU 105) transmits an E2 setup request message to the E2T node 802 of the near-RT RIC 800.

At 1003, the E2T node 802 transmits an E2 setup response message to the scheduler 601 of the PCell 121 in response to the E2 setup request message received from the scheduler 601 of the PCell 121.

At 1004, the E2T node 802 transmits an E2 setup response message to the scheduler 602 of the SCell 122 in response to the E2 setup request message received from the scheduler 602 of the SCell 122.

The E2 setup request message and the E2 setup response message are part of the E2 application protocol (E2AP), which facilitates communication between the near-RT RIC 800 and E2 nodes (such as the O-DU 105).

The E2 setup request message is sent by an E2 node to the near-RT RIC 800 to initiate the setup of the E2 interface. The E2 setup request message may include information about the E2 node's capabilities, supported RAN functions, and other relevant parameters.

The E2 setup response message is sent by the near-RT RIC 800 in response to the E2 setup request. The E2 setup response message confirms the establishment of the E2 interface and includes details about the accepted RAN functions and any additional configuration information.

At 1005, the scheduler 601 of the PCell 121 determines that one or more pre-defined conditions are fulfilled for collecting a first set of input data for determining a predicted throughput of a UE 100 on the primary cell 121.

For example, the one or more pre-defined conditions may comprise at least one of: receiving a sounding reference signal from the UE 100, or detecting a change (or a change above a threshold) in one or more parameters associated with a throughput of the UE 100.

At 1006, based on determining that the one or more pre-defined conditions are fulfilled (e.g., after SRS reception or observing parameter changes of the UE 100), the scheduler 601 of the PCell 121 collects the first set of input data for the PCell 121 and transmits the first set of input data to the E2T node 802 through the E2 interface. For example, the first set of input data may be transmitted in a PCell E2 indication comprising the first set of input data (e.g., real-time data). The contents of the input data are described above with reference to FIG. 7.

At 1007, the scheduler 602 of the SCell 122 determines that the one or more pre-defined conditions are fulfilled for collecting a second set of input data for determining a predicted throughput of the UE 100 on the secondary cell 122.

At 1008, based on determining that the one or more pre-defined conditions are fulfilled (e.g., after SRS reception or observing parameter changes of the UE 100), the scheduler 602 of the SCell 122 collects the second set of input data for the SCell 122, and transmits the second set of input data to the E2T node 802 through the E2 interface. For example, the second set of input data may be transmitted in an SCell E2 indication comprising the second set of input data (e.g., real-time-data). The contents of the input data are described above with reference to FIG. 7.

At 1009, the E2T node 802 processes and forwards the first set of input data (or the PCell E2 indication) to the throughput predictor xApp 801 of the near-RT RIC 800.

At 1010, the E2T node 802 processes and forwards the second set of input data (or the SCell E2 indication) to the throughput predictor xApp 801.

At 1011, the throughput predictor xApp 801 analyzes the received data and uses one or more machine learning models to predict, based on the first set of input data and the second set of input data, a throughput of the UE 100 on the primary cell 121 and on the secondary cell 122. That is, the xApp 801, which hosts the throughput prediction model(s), processes the input data and predicts the throughputs of the UE 100 on the PCell 121 and on the SCell 122.

At 1012, the throughput predictor xApp 801 transmits, to the scheduler 601 of the PCell 121 (e.g., via the E2T node 802), information indicating the predicted throughput of the UE 100 on the primary cell 121. The scheduler 601 receives the information.

At 1013, the throughput predictor xApp 801 transmits, to the scheduler 602of the SCell 122 (e.g., via the E2T node 802), information indicating the predicted throughput of the UE 100 on the secondary cell 122. The scheduler 602 receives the information.

At 1014, the scheduler 602 of the SCell 122 transmits, to the scheduler 601 of the PCell 121, the information indicating the predicted throughput of the UE 100 on the secondary cell 122.

At 1015, the scheduler 601 of the PCell 121 determines, based at least on the predicted throughput of the UE 100 on the primary cell 121 and the predicted throughput of the UE 100 on the secondary cell 122, a switching mode to be applied at the UE 100 for uplink Tx switching.

At 1016, the scheduler 601 of the PCell 121 indicates the determined switching mode to the scheduler 602 of the SCell 122.

Subsequently, the schedulers 601, 602 schedule resources for the UE 100 on the PCell 121 and the SCell 122, respectively, according to the determined switching mode. The scheduler 601 of the PCell 121 may indicate the determined switching mode to the UE 100 in the DCI, in which the resources scheduled for the UE 100 on the PCell 121 may be indicated.

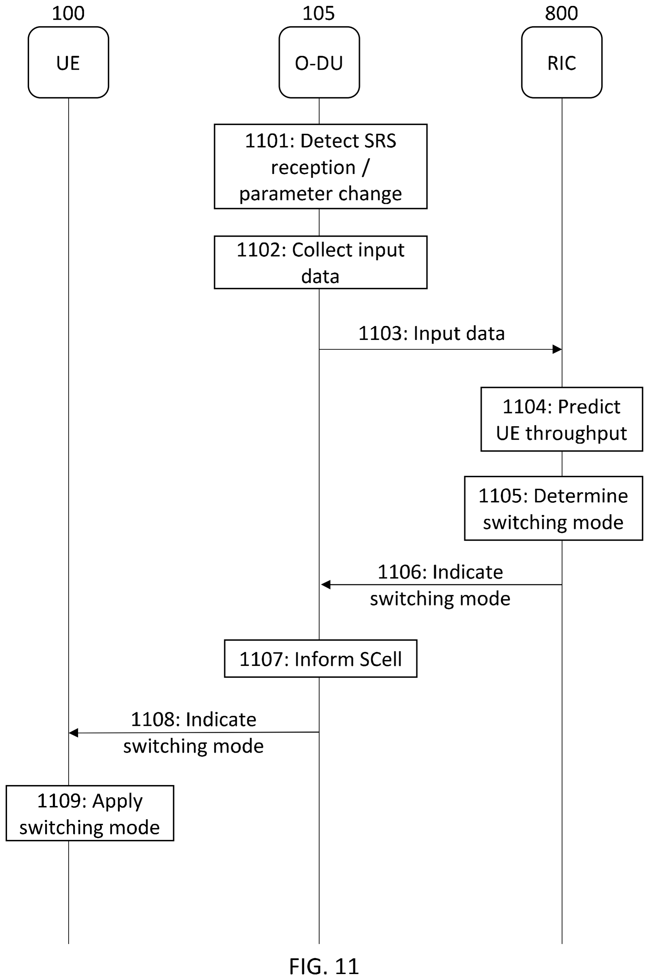

FIG. 11 illustrates a signal flow diagram according to an example embodiment of a RIC control method based on the system of FIG. 8. In this example embodiment, the throughput predictor xApp 801 hosts the throughput prediction model(s) and makes the decision on the switching mode selection as well. This means that the xApp 801 controls the whole switching mode selection process in this case.

Referring to FIG. 11, at 1101, the O-DU 105 determines that one or more pre-defined conditions are fulfilled for collecting a set of input data for determining a predicted throughput of a UE 100 on a primary cell 121 and/or on one or more secondary cells 122 of the UE 100.

For example, the one or more pre-defined conditions may comprise at least one of: receiving a sounding reference signal from the UE 100, or detecting a change (or a change above a threshold) in one or more parameters associated with a throughput of the UE 100.

At 1102, based on determining that the one or more pre-defined conditions are fulfilled (e.g., after SRS reception or observing parameter changes of the UE 100), the O-DU 105 collects the set of input data for the UE 100 on the PCell 121 and/or on the one or more SCells 122. The contents of the set of input data are described above with reference to FIG. 7.

At 1103, the O-DU 105 transmits the set of input data to the near-RT RIC 800 through the E2 interface. The near-RT RIC 800 receives the set of input data. The O-DU 105 may request inference assistance from the throughput predictor xApp 801 for predicting the throughput of the UE 100 on the PCell 121 and/or on the one or more SCell 122.

In the case of parameter changes, the O-DU 105 may report only the updated parameters instead of the full set of input data. The O-DU 105 may continue its operations with the current switching mode(s) of the UE 100 until it receives the control message from the near-RT RIC 800 at 1106.

At 1104, the throughput predictor xApp 801 uses one or more machine learning models to predict, based on the set of input data, a throughput of the UE 100 on the primary cell 121 and/or on the one or more secondary cells 122. That is, the xApp 801, which hosts the throughput prediction model, processes the input data and predicts the throughputs of the UE 100 on the PCell 121 and/or on the one or more SCells.

In other words, the near-RT RIC 800 comprises one or more machine learning models configured to predict, based on the set of input data, a throughput of the UE 100 on the primary cell 121 and/or on the one or more secondary cells 122.

At 1105, the near-RT RIC 800 (or the throughput predictor xApp 801) determines, based at least on the throughput prediction information for the PCell 121 and/or the one or more SCells 122, a switching mode to be applied at the UE 100. In other words, using the predicted throughputs of the UE 100 on the PCell 121 and SCell 122, the near-RT RIC 800 determines the switching mode of the UE 100.

The xApp 801 may maintain the context of previous inferences (i.e., previous throughput predictions) of the UE 100 on the PCell 121 and/or on the one or more SCells 122 and use them to make the switching mode decision in case of receiving input data only from either the PCell 121 or SCell 122 (but not from both).

At 1106, the near-RT RIC 800 indicates the determined switching mode to the O-DU 105 (or to the scheduler 601 of the PCell 121) via the E2 interface. The O-DU 105 receives the indication. For example, the determined switching mode may be indicated in a control message transmitted to the O-DU 105.

At 1107, based on the received indication, the O-DU 105 (or the scheduler 601 of the PCell 121) updates the switching mode decision as indicated from the near-RT RIC 800 and communicates the updated switching mode to the scheduler 602 of the SCell 122. Subsequently, the schedulers 601, 602 schedule resources for the UE 100 according to the updated switching mode.

At 1108, the O-DU 105 generates and transmits, to the UE 100, an indication (or a message) indicating the determined switching mode to be applied at the UE 100 for uplink transmit switching. The UE 100 receives the indication. For example, the indication may be conveyed to the UE 100 in the DCI, in which the scheduled resources are indicated.

At 1109, the UE 100 applies the indicated switching mode. As described above, the switching mode indicated to the UE 100 is based at least on the predicted throughput of the UE 100 on the primary cell 121 and on the one or more secondary cells 122 of the UE 100.

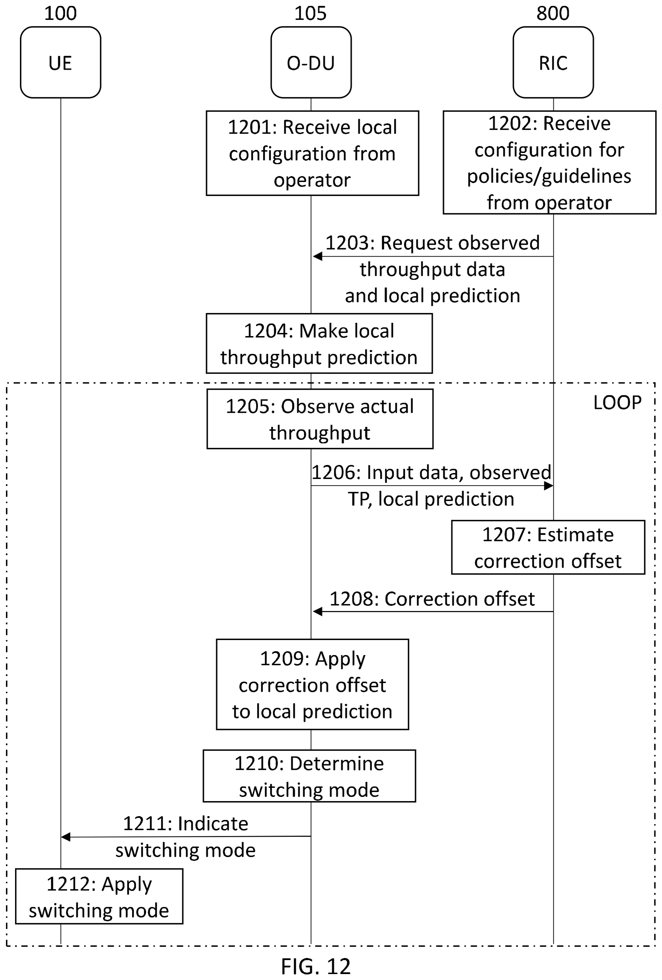

FIG. 12 illustrates a signal flow diagram according to an example embodiment of a RIC policy-based method based on the system of FIG. 8. This example embodiment is a hybrid solution, where the O-DU 105 hosts an algorithm (either ML or non-ML based) that makes local throughput predictions and makes the switching mode selection decision as well. The throughput predictor xApp 801 at the near-RT RIC 800 hosts the ML-based throughput prediction model(s). The xApp 801 may also contain guidelines or policies employed by the network operator, such as biases towards certain carriers, a preference order for carriers, etc. A correction offset calculated by the near-RT RIC 800 may be sent periodically to the O-DU 105, and this correction offset may be used by the O-DU 105 to improve one or more local throughput predictions (for a given UE or for multiple UEs). That is, there may be an inner loop running in the RAN making local throughput predictions for each UE whenever one or more input parameters change, and a slower loop involving the near-RT RIC 800 for providing correction offsets to the local throughput predictions.

Referring to FIG. 12, at 1201, the O-DU 105 receives a first configuration from the network operator, wherein the first configuration comprises local model parameters (i.e., configuration parameters for the local throughput predictor of the O-DU 105).

At 1202, the near-RT RIC 800 receives a second configuration from the network operator, wherein the second configuration comprises one or more policies and/or guidelines defined by the network operator, such as biases towards certain carriers, a preference order for carriers, etc.

An example of biases towards carriers is presented in the following. In this example, it is assumed that the operator does not want to update the switching mode decision unless the UE's throughput on the SCell 122 is higher than that of the throughput on the PCell 121 (e.g., by a certain offset or scale). If there is one PCell 121 and two SCells (namely, SCell1 and SCell2), then the operator may set the preference order for the carriers to give preference to SCell2, even if the throughput of SCell1 is higher than that of SCell 2. The xApp 801 may then improve or assist the decision-making at the O-DU 105 by using the optimal throughput predictor model and the guidelines and/or policies set by the operator.

At 1203, the near-RT RIC 800 requests the O-DU 105 (e.g., in a RIC request via the E2 interface) to report the set of input data, local measurements such as observed throughputs on the carrier(s) selected by switching mode, and local throughput predictions on all carriers utilized by the UE 100.

At 1204, the O-DU 105 determines, during an initial period, based on the collected set of input data (local measurements) and the first configuration, a corresponding local throughput prediction of the UE 100 on the primary cell 121 and on the one or more secondary cells 122. The O-DU 105 may make local switching mode decision(s) for the UE 100 using the local throughput prediction.

The initial period refers to the time frame during which the O-DU 105 collects the set of input data and makes the initial throughput prediction for the UE 100. For example, in the case of SRS reception or a parameter change, the O-DU 105 may collect the set of input data and perform a local throughput prediction for the UE 100 on the PCell 121 and on the one or more SCells 122 based on the set of input data.

At 1205, the O-DU 105 obtains measurement information indicating an observed throughput of the UE 100 on the primary cell 121 and on the one or more secondary cells 122. In other words, based on the local throughput prediction and switching mode decision, the O-DU 105 schedules the UE 100 and observes the actual (measured) throughput of the UE 100 on the PCell 121 and on the one or more SCells 122 in order to evaluate how accurate the local prediction was. The actual throughput may be observed during the same time instant or period for which the local throughput prediction was made, so that the predicted throughput and the actual throughput can be compared. For example, if the local throughput prediction is made 10 seconds into the future, then the actual throughput may be observed 10 seconds after performing the local throughput prediction.

At 1206, the O-DU 105 transmits, to the near-RT RIC 800, over the E2 interface, the measurement information (indicating the observed throughput), the corresponding local throughput prediction, and the set of input data used to determine the corresponding local throughput prediction.

At 1207, the near-RT RIC 800 (or the throughput predictor xAPP 801) uses the received information to make an improved throughput prediction for the UE 100 on the PCell 121 and on the one or more SCells 122. The near-RT RIC 800 compares the improved throughput prediction with the local throughput prediction of the O-DU 105. Based on the comparison and the one or more guidelines and/or policies, the near-RT RIC 800 determines a correction offset to be applied to the local prediction of the O-DU 105.

The correction offset refers to an adjustment factor provided by the near-RT RIC 800. The correction offset may be used to refine future local throughput predictions of the O-DU 105 for the UE 100 on the primary cell 121 and on the one or more secondary cells 122.

At 1208, the near-RT RIC 800 transmits the correction offset to the O-DU 105 (e.g., via a RIC policy over the E2 interface) to be applied to one or more subsequent local throughput predictions of the O-DU 105. The O-DU 105 receives the correction offset.

At 1209, the O-DU 105 applies the correction offset to a subsequent local throughput prediction for determining the predicted throughput of the UE 100 on the PCell 121 and on the one or more SCells 122. In other words, the O-DU 105 may make another local throughput prediction using the first configuration, the local measurements, and the correction offset.

At 1210, the O-DU 105 determines, based at least on the predicted throughput (to which the correction offset is applied), a switching mode to be applied at the UE 100. Subsequently, the schedulers 601, 602 schedule resources for the UE 100 according to the updated switching mode.

At 1211, based on the determination, the O-DU 105 generates and transmits, to the UE 100, an indication (or a message) indicating the determined switching mode to be applied at the UE 100 for uplink transmit switching. The UE 100 receives the indication. For example, the indication may be conveyed to the UE 100 in the DCI, in which the scheduled resources are indicated.

At 1212, the UE 100 applies the indicated switching mode. As described above, the switching mode indicated to the UE 100 is based at least on the predicted throughput of the UE 100 on the primary cell 121 and on the one or more secondary cells 122 of the UE 100.

It should be noted that steps 1205 to 1212 may be performed continuously in a loop.

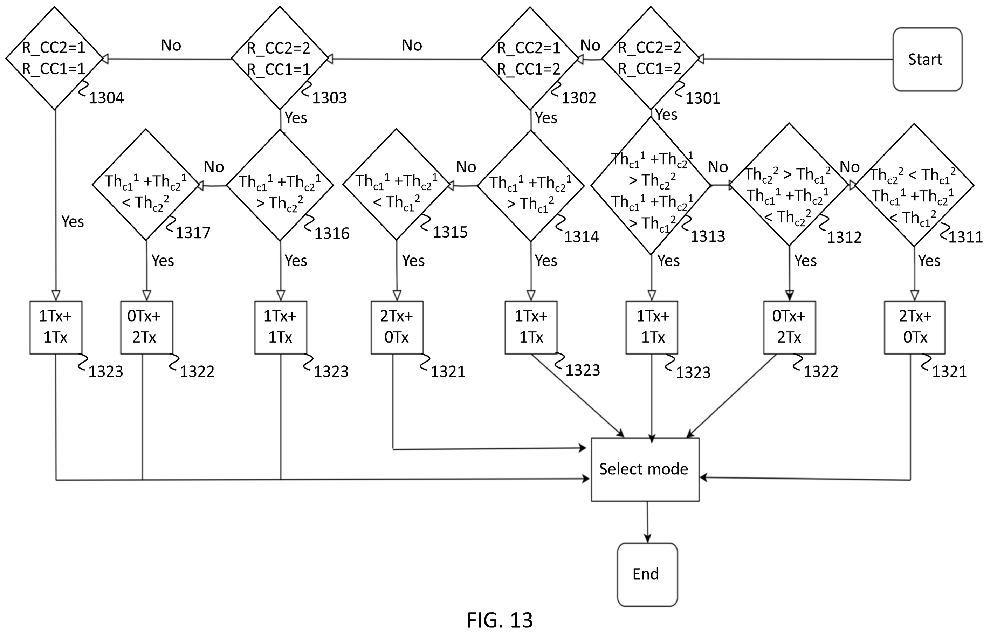

FIG. 13 illustrates a flow chart according to an example embodiment of a method for determining a switching mode to be applied at a user equipment 100 for uplink transmit switching. The method may be performed by an apparatus 2200 depicted in FIG. 22. For example, the apparatus 2200 may be, or comprise, or be comprised in, a distributed unit 105 or a monolithic base station 104 or a near-real-time radio access network intelligent controller 800.

In FIG. 13, two carriers (carrier 1 and carrier 2) are used as an example. However, it should be noted that the number of carriers may also be more than one. Th_{c1}¹ and Th_{c2}¹ are the rank one throughputs of carrier 1 (e.g., the PCell 121) and carrier 2 (e.g., the SCell 122), respectively, while Th_{c1}² and Th_{c2}² are the rank two throughputs of carrier 1 and carrier 2, respectively. R_CC1 and R_CC2 are the ranks of carrier 1 and carrier 2, respectively. Herein the terms "carrier" and "cell" may be used interchangeably.

In this method, based on the SRS MIMO rank (as it directly impacts throughput) on a given carrier, one or two inferences may be needed from the throughput predictor. In case of SRS rank 1, only one inference may be needed for that carrier to predict rank 1 throughput. In the case of SRS rank 2, two inferences may be needed. One inference is for rank 1 throughput prediction, and the other is for rank 2 throughput prediction (throughput achieved if dual stream possible). These inferences may be made on a per carrier basis. Selecting the right UL Tx switching mode may be achieved by using the predicted throughputs of all carriers used by the UE 100. The decision of the switching mode may be based on the following conditions.

If the rank of both carriers (the PCell 121 and the SCell 122) is two (block 1301: yes), then the selection may be done as follows.

The 2Tx+0Tx switching mode 1321 may be selected, if the rank 2 throughput of carrier 1 is greater than both the rank 2 throughput of carrier 2 and the sum of the rank 1 throughputs of carrier 1 and carrier 2 (block 1311: yes).

Alternatively, the 0Tx+2Tx switching mode 1322 may be selected, if the rank 2 throughput of carrier 2 is greater than both the rank 2 throughput of carrier 1 and the sum of the rank 1 throughputs of carrier 1 and carrier 2 (block 1312: yes).

Alternatively, the 1Tx+1Tx switching mode 1323 may be selected, if the sum of the rank 1 throughputs of carriers 1 and 2 is greater than the rank 2 throughputs of carrier 1 and carrier 2 individually (block 1313: yes).

If the rank of carrier 1 (e.g., the PCell 121) is two and the rank of carrier 2 (e.g., the SCell 122) is one (block 1302: yes), then the selection may be done as follows.

The 1Tx+1Tx switching mode 1323 may be selected, if the sum of the rank 1 throughputs of carriers 1 and 2 is greater than the rank 2 throughput of carrier 1 (block 1314: yes).

Alternatively, the 2Tx+0Tx switching mode 1321 may be selected, if the rank 2 throughput of carrier 1 is greater than the sum of the rank 1 throughputs of carrier 1 and carrier 2 (block 1315: yes).

If the rank of carrier 1 is one and the rank of carrier 2 is two (block 1303: yes), then the selection may be done as follows.

The 1Tx+1Tx switching mode 1323 may be selected, if the sum of the rank 1 throughputs of both carriers 1 and 2 is greater than the rank 2 throughput of carrier 2 (block 1316: yes).

Alternatively, the 0Tx+2Tx switching mode 1322 may be selected, if the rank 2 throughput of carrier 2 is greater than the sum of the rank 1 throughputs of carrier 1 and carrier 2 (block 1317: yes).

If the rank of both carriers 1 and 2 is one (block 1304: yes), then the 1Tx+1Tx switching mode 1323 may be selected.

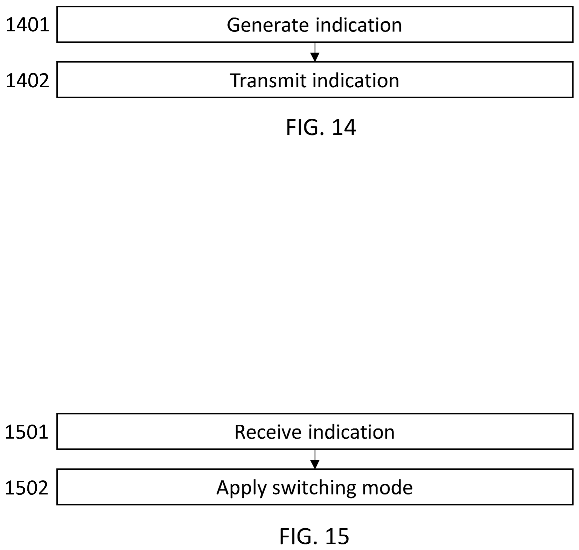

FIG. 14 illustrates a flow chart according to an example embodiment of a method for determining a switching mode to be applied at a user equipment 100 for uplink transmit switching. The method of FIG. 14 may be performed by an apparatus 2200 depicted in FIG. 22. For example, the apparatus 2200 may be, or comprise, or be comprised in, a network node of a radio access network, such as an access node (base station) 104 (e.g., a gNB), or a distributed unit 105, or a near-real-time radio access network intelligent controller 800.

Referring to FIG. 14, according to a first aspect, the method comprises at least the following.

In block 1401, the apparatus 2200 generates an indication indicating a switching mode to be applied at a user equipment for uplink transmit switching, wherein the switching mode is based at least on a predicted throughput of the user equipment on a primary cell and on one or more secondary cells of the user equipment. For example, the switching mode may comprise one of: a 2Tx+0Tx switching mode 1321, a 0Tx+2Tx switching mode 1322, or a 1Tx+1Tx switching mode.

In block 1402, the apparatus 2200 transmits the indication to the user equipment. In case the apparatus 2200 is the near-RT RIC 800, then the indication may be transmitted to the UE 100 via the O-DU 105.

According to a second aspect, there is provided the method of the first aspect, further comprising: collecting a set of input data for determining the predicted throughput of the user equipment on the primary cell and on the one or more secondary cells, wherein the set of input data comprises at least: one or more scheduler-related metrics, pathloss information associated with the user equipment, a multiple-input and multiple-output rank of the user equipment on the primary cell and on the one or more secondary cells, one or more power headroom reports associated with the user equipment, measurement information associated with one or more sounding reference signals transmitted from the user equipment, and one or more beam identifiers of one or more beams serving the user equipment.

According to a third aspect, there is provided the method of the second aspect, wherein the one or more scheduler-related metrics comprise at least one of: one or more metrics related to a proportional fair scheduling algorithm, a number of users in time-domain scheduling, or a number of users in frequency-domain scheduling.

According to a fourth aspect, there is provide the method of the second or third aspect, further comprising: determining whether one or more pre-defined conditions for collecting the set of input data are fulfilled, wherein the set of input data is collected based on determining that the one or more pre-defined conditions are fulfilled, wherein the one or more pre-defined conditions comprise at least one of: receiving a sounding reference signal from the user equipment, or detecting a change in one or more parameters associated with a throughput of the user equipment.

According to a fifth aspect, there is provided the method of any of the second to fourth aspects, further comprising: obtaining, based on the set of input data, information indicating the predicted throughput of the user equipment on the primary cell and on the one or more secondary cells; and determining, based at least on the information, the switching mode to be applied at the user equipment (e.g., as described above with reference to FIG. 13), wherein the indication is transmitted to the user equipment based on the determination.

According to a sixth aspect, there is provided the method of the fifth aspect, wherein the information indicating the predicted throughput is obtained by using one or more machine learning models configured to predict, based on the set of input data, a throughput of the user equipment on the primary cell and on the one or more secondary cells.

According to a seventh aspect, there is provided the method of the sixth aspect, wherein the one or more machine learning models comprise a first machine learning model and a second machine learning model, wherein the first machine learning model is configured to predict resource allocation information based at least on the one or more scheduler-related metrics, the pathloss information, and the multiple-input and multiple-output rank of the user equipment on at least one of the primary cell or the one or more secondary cells, wherein the second machine learning model is configured to predict the throughput of the user equipment based at least on the resource allocation information from the first machine learning model, the measurement information associated with the one or more sounding reference signals, the pathloss information, the multiple-input and multiple-output rank of the user equipment on at least one of the primary cell or the one or more secondary cells, the one or more power headroom reports, and the one or more beam identifiers.

According to an eighth aspect, there is provided the method of the fifth aspect, further comprising: transmitting, to a near-real-time radio access network intelligent controller, the set of input data for determining the predicted throughput of the user equipment on the primary cell and on the one or more secondary cells, wherein the near-real-time radio access network intelligent controller comprises one or more machine learning models configured to predict, based on the set of input data, a throughput of the user equipment on the primary cell and on the one or more secondary cells, wherein the information indicating the predicted throughput is obtained by receiving the information from the near-real-time radio access network intelligent controller.

According to a ninth aspect, there is provided the method of any of the second to fourth aspects, further comprising: transmitting, to a near-real-time radio access network intelligent controller, at least a part of the set of input data for determining the predicted throughput of the user equipment on the primary cell and on the one or more secondary cells, wherein the near-real-time radio access network intelligent controller comprises one or more machine learning models configured to predict, based on at least the part of the set of input data, a throughput of the user equipment on the primary cell and on the one or more secondary cells; and receive, from the near-real-time radio access network intelligent controller, based on transmitting at least the part of the set of input data, a message indicating the switching mode to be applied at the user equipment, wherein the indication is transmitted to the user equipment based on the message received from the near-real-time radio access network intelligent controller.

According to a tenth aspect, there is provided the method of any of the second to fourth aspects, further comprising: determining, during an initial period, based at least on the set of input data, a corresponding local throughput prediction of the user equipment on the primary cell and on the one or more secondary cells; obtaining measurement information indicating an observed throughput of the user equipment on the primary cell and on the one or more secondary cells; transmitting, to a near-real-time radio access network intelligent controller, the measurement information, the corresponding local throughput prediction, and the set of input data used to determine the corresponding local throughput prediction; receiving, from the near-real-time radio access network intelligent controller, a correction offset to be applied to one or more subsequent local throughput predictions; applying the correction offset to a subsequent local throughput prediction for determining the predicted throughput of the user equipment on the primary cell and on the one or more secondary cells; and determining the switching mode to be applied at the user equipment based at least on the predicted throughput to which the correction offset is applied.

In another embodiment, there is provided an apparatus 2200 comprising means for causing the apparatus 2200 to perform at least the method of any of the first to tenth aspects.

In another embodiment, there is provided an apparatus 2200 comprising at least one processor, and at least one memory storing instructions that, when executed by the at least one processor, cause the apparatus 2200 at least to perform the method of any of the first to tenth aspects.

In another embodiment, there is provided a computer program comprising instructions which, when executed by an apparatus 2100, cause the apparatus 2100 to perform at least the method of any of the first to tenth aspects.

In another embodiment, there is provided a computer readable medium comprising program instructions which, when executed by an apparatus, cause the apparatus to perform at least the method of any of the first to tenth aspects.

In another embodiment, there is provided a non-transitory computer readable medium comprising program instructions which, when executed by an apparatus 2100, cause the apparatus 2100 to perform at least the method of any of the first to tenth aspects.

FIG. 15 illustrates a flow chart according to an example embodiment of a method for applying a switching mode. The method may be performed by an apparatus 2100 depicted in FIG. 21. For example, the apparatus 2100 may be, or comprise, or be comprised in, a user equipment (UE) 100, 102.

Referring to FIG. 15, the method comprises at least the following.

In block 1501, the apparatus 2100 receives, from a network node (e.g., the DU 105), an indication indicating a switching mode to be applied at the apparatus 2100 for uplink transmit switching, wherein the switching mode is based at least on a predicted throughput of the apparatus 2100 on a primary cell 121 and on one or more secondary cells 122 of the apparatus 2100.

In block 1502, the apparatus 2100 applies the switching mode indicated by the indication.

In another embodiment, there is provided an apparatus 2100 comprising means for causing the apparatus 2100 to perform the method of FIG. 15.

In another embodiment, there is provided an apparatus 2100 comprising at least one processor, and at least one memory storing instructions that, when executed by the at least one processor, cause the apparatus 2100 at least to perform the method of FIG. 15.

In another embodiment, there is provided a computer program comprising instructions which, when executed by an apparatus 2100, cause the apparatus 2100 to perform at least the method of FIG. 15.

In another embodiment, there is provided a computer readable medium comprising program instructions which, when executed by an apparatus, cause the apparatus to perform at least the method of FIG. 15.

In another embodiment, there is provided a non-transitory computer readable medium comprising program instructions which, when executed by an apparatus 2100, cause the apparatus 2100 to perform at least the method of FIG. 15.

The blocks, related functions, and information exchanges (messages) described above by means of FIGS. 7 and 9 to 15 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "the at least one" and "the one or more" mean "any one of the at least one" and "any one of the one or more", respectively.

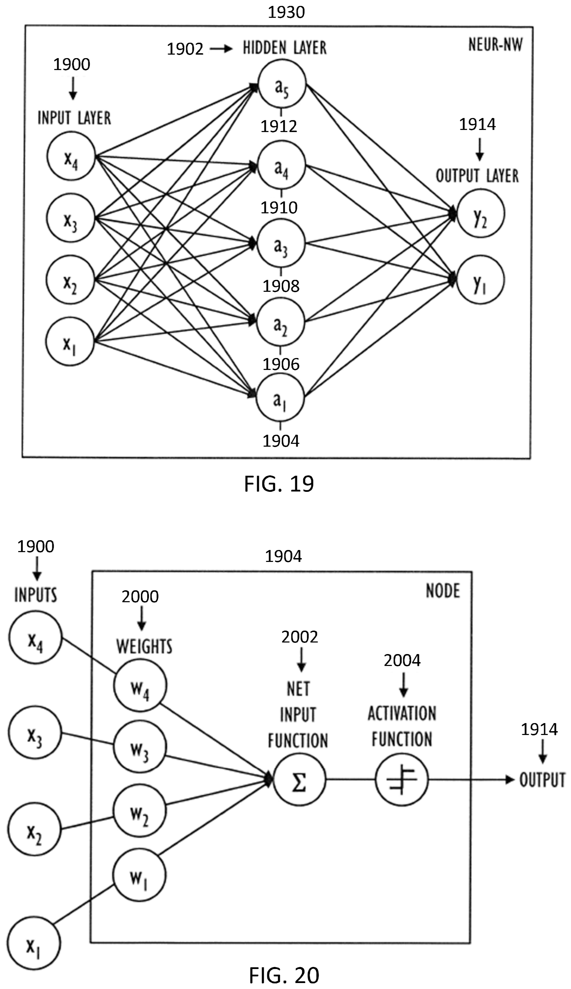

FIG. 16 illustrates an example of a single-model throughput predictor 1610. In this example, a single machine learning model 1610 is used to predict the throughput of the UE 100 on a given cell (e.g., on the PCell 121 or on the Scell 122). The single-model throughput predictor 1610 may correspond to the predictors 500, 501, 502 shown in FIG. 5. In other words, there may be separate single-model throughput predictor 1610 for each cell 121, 122. For example, the throughput predictor 1610 may comprise an artificial neural network (e.g., see FIG. 19), such as a sequential neural network, a recurrent neural network (RNN), a convolutional neural network (CNN), or any other suitable type of machine learning model.

The throughput prediction is based on a set of input data 1600 provided to the throughput predictor 1610. The set of input data 1600 may comprise, for example, at least one of: one or more scheduler-related metrics, pathloss information associated with the UE 100, a MIMO rank of the UE 100 on the primary cell 121 and on the one or more secondary cells 122, one or more power headroom reports (PHRs) associated with the UE 100, measurement information associated with one or more sounding reference signals transmitted from the UE 100, and one or more beam identifiers (e.g., beamID1, beamID2) of one or more beams serving the UE 100.

The scheduler-related metrics refer to metrics used by the scheduler 601, 602 to allocate resources efficiently among users. For example, the one or more scheduler-related metrics may comprise at least one of: one or more metrics related to a proportional fair (PF) scheduling algorithm (e.g., the latest PF metric (a real number) of the UE 100, and/or an average of the PF metrics of all the UEs that were scheduled in the previous slot), a number of users in time-domain scheduling (numTDuser), or a number of users in frequency-domain scheduling (numFDuser).

Pathloss refers to the reduction in signal strength as it travels from the transmitter (e.g., the UE 100) to the receiver (e.g., the DU 105). Pathloss is influenced by factors such as distance, obstacles, and environmental conditions.

The MIMO rank indicates the number of independent data streams that can be transmitted simultaneously between the UE 100 and the DU 105. A higher MIMO rank generally means better data throughput and improved spectral efficiency.

Power headroom reports provide information about the difference between the maximum transmission power of the UE 100 and the current transmission power being used. This helps the network to manage power control and resource allocation more effectively for the UE 100.

The measurement information associated with the one or more sounding reference signals SRS) may comprise information on at least one of: signal-to-interference-plus-noise ratio (SINR), interference, average interference, or average reference signal strength indicator (RSSI).

The SINR measures the quality of the SRS by comparing the power of the desired signal to the sum of the interference power from other signals and the background noise.

The interference refers to the level of interference affecting the sounding reference signal(s). The interference may include unwanted signals from other sources that can degrade the quality of the SRS.

The average interference refers to the average level of interference affecting the SRS over a period of time. It helps in understanding the overall interference environment and its impact on the SRS.

The average RSSI measures the average power level of the received SRS, indicating how strong the signal is when it reaches the receiver (e.g., the DU 105).

Beam identifiers are used to distinguish between different transmission beams in a multi-beam system. Beam identifiers help in identifying which beam is serving the UE 100. A beam serving the UE 100 refers to a focused radio frequency signal directed towards the UE 100 from the DU 105 (or from the RU 103). In modern wireless communication systems, such as 5G, beamforming technology is used to create these beams. Beamforming allows the base station to direct the signal precisely towards the UE 100, enhancing signal strength, data rates, and overall communication quality.

For training the throughput predictor model 1610, the training data may comprise the input data shown in FIG. 16 (i.e., the same parameters but possibly with different values), as well as the expected output of the model (i.e., the throughput corresponding to the given input data).

FIG. 17 illustrates an example of a dual-model throughput predictor comprising a first machine learning model 1710 and a second machine learning model 1720. The dual-model throughput predictor may correspond to the predictors 500, 501, 502 shown in FIG. 5. In other words, there may be separate dual-model throughput predictor for each cell 121, 122. In this example, one model 1710 is used to predict the possible resource allocation of the UE 100, and the other model 1720 is used to predict the throughput using the predicted resource allocation along with additional inputs, as shown in FIG. 17. Both models 1710, 1720 may be trained on datasets collected from the same simulation, ensuring consistency and relevance in the data.

The first machine learning model 1710 is configured (or trained) to predict resource allocation information for the user equipment 100 based at least on the one or more scheduler-related metrics, the pathloss information, and the multiple-input and multiple-output rank of the user equipment 100 on at least one of the primary cell 121 or the one or more secondary cells 122. For example, the first machine learning model 1710 may be an artificial neural network.

The second machine learning model 1720 is configured to predict the throughput of the user equipment 100 based at least on the resource allocation information provided from the first machine learning model 1710, the measurement information associated with the one or more sounding reference signals, the pathloss information, the multiple-input and multiple-output rank of the user equipment 100 on at least one of the primary cell 121 or the one or more secondary cells 122, the one or more power headroom reports, and the one or more beam identifiers. For example, the second machine learning model 1720 may be an artificial neural network (e.g., with the same size as the artificial neural network of the first machine learning model 1710).

The resource allocation information refers to data that determines how network resources are distributed to the UE 100. For example, the predicted resource allocation information may include predictions about the allocation of physical resource blocks (PRBs) to the UE 100.

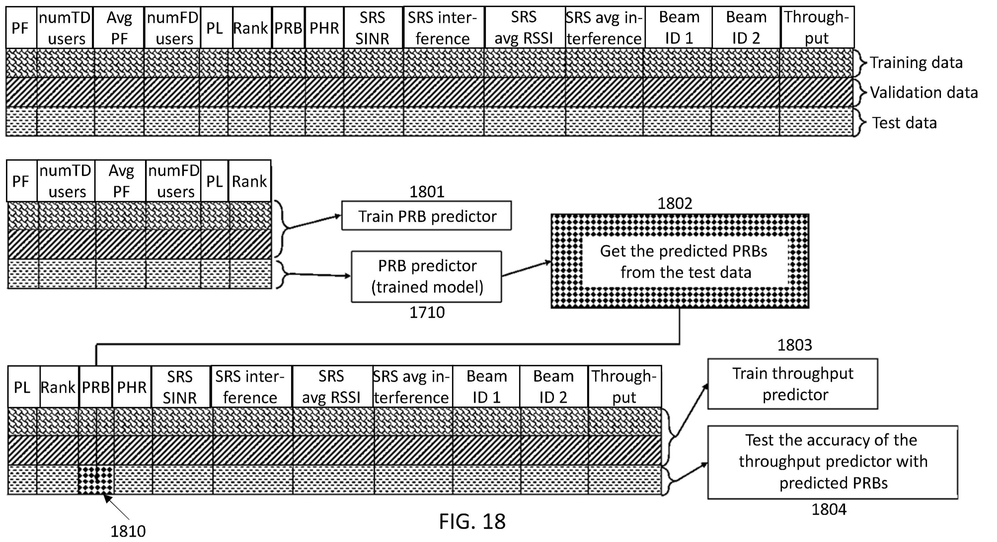

FIG. 18 illustrates a flow diagram of an example embodiment for training the dual-model throughput predictor shown in FIG. 17. The training may be performed at any computing device with sufficient computational resources. The first ML model (PRB predictor model) 1710 takes several inputs, including the user's attribute PF metrics and average PF metrics, pathloss, rank, the number of users in time-domain scheduling (numTDuser), and the number of users in frequency-domain scheduling (numFDuser). The dataset is divided into training, validation, and test sets.

Initially, in block 1801, the first ML model 1710 is trained using the training and validation datasets.

In block 1802, once the first ML model (PRB predictor model) 1710 is trained, the test dataset is used to produce a predicted PRB dataset 1810 with the trained PRB predictor model 1710. This dataset 1810 is later utilized to evaluate the accuracy of the throughput predictor model 1720.

The feature set of the throughput predictor model 1720 includes pathloss, rank, the allocated PRBs, power headroom report (PHR), SRS SINR, SRS interference, SRS average RSSI, SRS average interference, and one or more beam identifiers.

In block 1803, similar to the PRB predictor 1710, the throughput predictor model 1720 is trained using training and validation datasets. During the training phase, the actual allocated PRB data (original PRBs) recorded during the simulation is used in training and validation.

In block 1804, to test the prediction accuracy, the actual allocated PRB column in the test dataset is replaced with the predicted PRB dataset 1810 generated by the PRB prediction model 1710, as also depicted in FIG. 17. This replacement is done to incorporate the overall error induced by the two models 1710, 1720, providing a more realistic evaluation of the performance of the throughput predictor 1720.

By structuring the dual-model throughput predictor in this way, it is possible to achieve a more integrated and comprehensive approach for predicting the throughput, taking into account the compounded errors and interdependencies between the two models 1710, 1720. This not only enhances the accuracy of predictions, but also provides valuable insights into the performance of the system under different conditions.

FIG. 19 illustrates an example of an artificial neural network 1930 with one or more hidden layers 1902, and FIG. 20 illustrates an example of a computational node 1904. The artificial neural network 1930 is one example of the throughput predictor model 1610 of FIG. 16 and the two machine learning models 1710, 1720 of FIG. 17.

Although only one hidden layer 1902 is shown in FIG. 19, it should be noted that the artificial neural network 1930 may also comprise more than one hidden layer 1902. For example, in one embodiment, the artificial neural network 1930 may comprise three hidden layers 1902.

An artificial neural network (ANN) 1930 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 1930 is an artificial neural network comprising multiple hidden layers 1902 between the input layer 1900 and the output layer 1914. Training of DNN allows it to find the correct mathematical manipulation to transform the input into the proper output, even when the relationship is highly non-linear and/or complicated. Deep learning may require a large amount of input data.

A given hidden layer 1902 comprises nodes 1904, 1906, 1908, 1910, 1912, where the computation takes place. As shown in FIG. 20, a given node 1904 combines input data 1900 with a set of coefficients, or weights 2000, that either amplify or dampen that input 1900, thereby assigning significance to inputs 1900 with regard to the task that the algorithm is trying to learn. The input-weight products are added 2002 and the sum is passed through an activation function 2004, to determine whether and to what extent that signal should progress further through the neural network 1930 to affect the ultimate outcome, such as an act of classification. In the process, the neural network learns to recognize correlations between certain relevant features and optimal results.

In the case of classification, the output of a DNN 1930 may be considered as a likelihood of a particular outcome. In this case, the number of layers 1902 may vary proportional to the number of the used input data 1900. However, when the number of input data 1900 is high, the accuracy of the outcome 1914 is more reliable. On the other hand, when there are fewer layers 1902, the computation might take less time and thereby reduce the latency. However, this highly depends on the specific DNN architecture and/or the computational resources available.

Initial weights 2000 of the model can be set in various alternative ways. During the training phase, they may be adapted to improve the accuracy of the process based on analyzing errors in decision-making. Training a model is basically a trial-and-error activity. In principle, a given node 1904, 1906, 1908, 1910, 1912 of the neural network 1930 makes a decision (input*weight) and then compares this decision to collected data to find out the difference to the collected data. In other words, it determines the error, based on which the weights 2000 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 2000, so that the next evaluation reduces the error, meaning that the optimization algorithm is navigating down the gradient (or slope) of error. It is also possible to use any other suitable optimization algorithm, if it provides sufficiently accurate weights 2000. Consequently, the trained parameters of the neural network 1930 may comprise the weights 2000.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 2000, any suitable method may be used as a loss function. Some examples of a loss function are mean squared error (MSE), maximum likelihood estimation (MLE), and cross entropy.

As for the activation function 2004 of the node 1904, it defines the output 1914 of that node 1904 given an input or set of inputs 1900. The node 1904 calculates a weighted sum of inputs, perhaps adds a bias, and then makes a decision as "activate" or "not activate" based on a decision threshold as a binary activation or using an activation function 2004 that gives a nonlinear decision function. Any suitable activation function 2004 may be used, for example sigmoid, rectified linear unit (ReLU), normalized exponential function (softmax), sotfplus, tanh, etc. In deep learning, the activation function 2004 may be set at the layer level and applies to all neurons (nodes) in that layer. The output 1914 is then used as input for the next node and so on until a desired solution to the original problem is found.

The training dataset for training the neural network for throughput prediction may include various features relevant to throughput prediction and characteristics simulated in different scenarios. To ensure consistency and improve model performance, standard scaling may be applied to the data. The dataset may be split into training, validation, and test sets. For example, 80 % of the data may be used for training the model, while the remaining 20 % may be reserved for testing and validation. The data may be split to ensure that the model's performance can be accurately evaluated on unseen data. To prevent overfitting and improve generalization, regularization may be incorporated into the neural network. A regularization parameter may be applied to the hidden layer(s), which helps to penalize large weights and encourages the model to learn more general patterns.

For example, the model may be trained using mean squared error (MSE) as the loss function, which is suitable for regression tasks. The Adam optimizer may be employed to update the model weights during training (due to its efficiency and adaptive learning rate properties, which help in faster convergence). To evaluate the performance of the neural network, MSE may be used to measure the average squared difference between the actual and predicted values, providing a sense of the overall prediction error. Additionally, validation loss may be monitored during training to ensure that the model is not overfitting and generalizes well to the validation data.

According to simulation results for the single-model throughput predictor 1610 (see FIG. 16), for both training and validation data, the MSE continuously decreases as the number of epochs increases. This signifies effective learning and good generalization of the model. According to the simulation results, the prediction error for the training, validation and testing datasets is less than 20% for 80% of the time. This indicates that the model maintains a high level of accuracy in predicting the throughput.

According to simulation results for the dual-model throughput predictor (see FIG. 17), when using original (non-predicted) PRBs for all datasets, the prediction error for the training, validation and testing datasets is less than 20% for 95% of the time. This demonstrates that the model maintains a high level of accuracy in predicting throughput, showcasing its robustness and reliability for real-world applications.

When comparing the throughput prediction error on the testing dataset using both the original PRBs and the predicted PRBs, the simulation results indicate that the model performs better with the original PRB data compared to the predicted PRB data, but it still maintains reasonable accuracy with the predicted data. So, to get higher prediction accuracy in the dual-model throughput prediction, it is beneficial to obtain a lower prediction error in the predicted PRBs.

According to the simulation results, when comparing the performance of the single-model throughput predictor and the dual-model throughput predictor, the performance of both options appears to be almost the same in terms of prediction error.

FIG. 21 illustrates an example of an apparatus 2100 comprising means for performing one or more of the example embodiments (e.g., the method of FIG. 15) described above. For example, the apparatus 2100 may be an apparatus such as, or comprising, or comprised in, a user equipment (UE) 100, 102. The user equipment may also be called a wireless communication device, a subscriber unit, a mobile station, a remote terminal, an access terminal, a user terminal, a terminal device, or a user device.

The apparatus 2100 may comprise a circuitry or a chipset applicable for realizing one or more of the example embodiments described above. For example, the apparatus 2100 may comprise at least one processor 2110. The at least one processor 2110 interprets instructions (e.g., computer program instructions) and processes data. The at least one processor 2110 may comprise one or more programmable processors. The at least one processor 2110 may comprise programmable hardware with embedded firmware and may, alternatively or additionally, comprise one or more application-specific integrated circuits (ASICs).

The at least one processor 2110 is coupled to at least one memory 2120. The at least one processor is configured to read and write data to and from the at least one memory 2120. The at least one memory 2120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 2120 stores computer readable instructions that are executed by the at least one processor 2110 to perform one or more of the example embodiments described above. For example, non-volatile memory stores the computer readable instructions, and the at least one processor 2110 executes the instructions using volatile memory for temporary storage of data and/or instructions. The computer readable instructions may refer to computer program code.

The computer readable instructions may have been pre-stored to the at least one memory 2120 or, alternatively or additionally, they may be received, by the apparatus, via an electromagnetic carrier signal and/or may be copied from a physical entity such as a computer program product. Execution of the computer readable instructions by the at least one processor 2110 causes the apparatus 2100 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 2100 may further comprise, or be connected to, an input unit 2130. The input unit 2130 may comprise one or more interfaces for receiving input. The one or more interfaces may comprise, for example, at least one of: one or more temperature, motion and/or orientation sensors, one or more cameras, one or more accelerometers, one or more microphones, one or more buttons and/or one or more touch detection units. Further, the input unit 2130 may comprise an interface to which external devices may connect to.

The apparatus 2100 may also comprise an output unit 2140. The output unit may comprise or be connected to one or more displays capable of rendering visual content, such as a light emitting diode (LED) display, a liquid crystal display (LCD) and/or a liquid crystal on silicon (LCoS) display. The output unit 2140 may further comprise one or more audio outputs. The one or more audio outputs may be for example loudspeakers.

The apparatus 2100 further comprises a connectivity unit 2150. The connectivity unit 2150 enables wireless connectivity to one or more external devices. The connectivity unit 2150 comprises at least one transmitter and at least one receiver that may be integrated to the apparatus 2100 or that the apparatus 2100 may be connected to. The at least one transmitter comprises at least one transmission antenna, and the at least one receiver comprises at least one receiving antenna. The connectivity unit 2150 may comprise an integrated circuit or a set of integrated circuits that provide the wireless communication capability for the apparatus 2100. Alternatively, the wireless connectivity may be a hardwired application-specific integrated circuit (ASIC). The connectivity unit 2150 may also provide means for performing at least some of the blocks or functions of one or more example embodiments described above. The connectivity unit 2150 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 2100 may further comprise various components not illustrated in FIG. 21. The various components may be hardware components and/or software components.

FIG. 22 illustrates an example of an apparatus 2200 comprising means for causing the apparatus 2200 to perform one or more of the example embodiments described above (e.g., the method of FIG. 7, or the method of FIG. 14, or the functionalities of the O-DU 105 or near-RT RIC 800 of FIGS. 9 to 12). For example, the apparatus 2200 may be an apparatus such as, or comprising, or comprised in, a network node of a radio access network, such as an access node (base station) 104 (e.g., a gNB), or a distributed unit 105, or a near-real-time radio access network intelligent controller 800.

The apparatus 2200 may comprise, for example, a circuitry or a chipset applicable for realizing one or more of the example embodiments described above. The apparatus 2200 may be an electronic device comprising one or more electronic circuitries. The apparatus 2200 may comprise a communication control circuitry 2210 such as at least one processor, and at least one memory 2220 storing instructions 2222 which, when executed by the at least one processor, cause the apparatus 2200 to carry out one or more of the example embodiments described above. Such instructions 2222 may, for example, include computer program code (software). The at least one processor and the at least one memory storing the instructions may provide the means for providing or causing the performance of any of the methods and/or blocks described above.

The processor is coupled to the memory 2220. The processor is configured to read and write data to and from the memory 2220. The memory 2220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 2220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 2220 or, alternatively or additionally, they may be received, by the apparatus, via an electromagnetic carrier signal and/or may be copied from a physical entity such as a computer program product. Execution of the computer readable instructions causes the apparatus 2200 to perform one or more of the functionalities described above.

The memory 2220 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 2200 may further comprise or be connected to a communication interface 2230, such as a radio unit, comprising hardware and/or software for realizing communication connectivity with one or more wireless communication devices according to one or more communication protocols. The communication interface 2230 comprises at least one transmitter (Tx) and at least one receiver (Rx) that may be integrated to the apparatus 2200 or that the apparatus 2200 may be connected to. The communication interface 2230 may provide means for performing some of the blocks and/or functions (e.g., transmitting and receiving) for one or more example embodiments described above. The communication interface 2230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 2230 provides the apparatus with radio communication capabilities to communicate in the wireless communication network. The communication interface may, for example, provide a radio interface to one or more UEs 100, 102. The apparatus 2200 may further comprise or be connected to another interface towards a core network 110, such as the network coordinator apparatus or AMF, and/or to other access nodes of the wireless communication network.

The apparatus 2200 may further comprise one or more schedulers 2240 configured to allocate radio resources. The one or more schedulers 2240 may be configured along with the communication control circuitry 2210 or it may be separately configured.

It is to be noted that the apparatus 2200 may further comprise various components not illustrated in FIG. 22. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (2200) comprising at least one processor (2210), and at least one memory (2220) storing instructions (2222) that, when executed by the at least one processor (2210), cause the apparatus (2200) at least to:
generate an indication indicating a switching mode (1321, 1322, 1323) to be applied at a user equipment (100) for uplink transmit switching,
wherein the switching mode (1321, 1322, 1323) is based at least on a predicted throughput of the user equipment (100) on a primary cell (121) and on one or more secondary cells (122) of the user equipment (100); and
transmit the indication to the user equipment (100).

2. The apparatus (2200) of claim 1, further being caused to:
collect a set of input data for determining the predicted throughput of the user equipment (100) on the primary cell (121) and on the one or more secondary cells (122),
wherein the set of input data comprises at least:
one or more scheduler-related metrics,
pathloss information associated with the user equipment (100),
a multiple-input and multiple-output rank of the user equipment (100) on the primary cell (121) and on the one or more secondary cells (122),
one or more power headroom reports associated with the user equipment (100),
measurement information associated with one or more sounding reference signals transmitted from the user equipment (100), and
one or more beam identifiers of one or more beams serving the user equipment (100).

3. The apparatus (2200) of claim 2, wherein the one or more scheduler-related metrics comprise at least one of:
one or more metrics related to a proportional fair scheduling algorithm,
a number of users in time-domain scheduling, or
a number of users in frequency-domain scheduling.

4. The apparatus (2200) of claim 2 or 3, further being caused to:
determine whether one or more pre-defined conditions for collecting the set of input data are fulfilled,
wherein the set of input data is collected based on determining that the one or more pre-defined conditions are fulfilled,
wherein the one or more pre-defined conditions comprise at least one of:
receiving a sounding reference signal from the user equipment (100), or
detecting a change in one or more parameters associated with a throughput of the user equipment (100).

5. The apparatus (2200) of any of claims 2 to 4, further being caused to:
obtain, based on the set of input data, information indicating the predicted throughput of the user equipment (100) on the primary cell (121) and on the one or more secondary cells (122); and
determine, based at least on the information, the switching mode (1321, 1322, 1323) to be applied at the user equipment (100),
wherein the indication is transmitted to the user equipment (100) based on the determination.

6. The apparatus (2200) of claim 5, wherein the information indicating the predicted throughput is obtained by using one or more machine learning models (500, 501, 502, 801, 1610, 1710, 1720) configured to predict, based on the set of input data, a throughput of the user equipment (100) on the primary cell (121) and on the one or more secondary cells (122).

7. The apparatus (2200) of claim 6, wherein the one or more machine learning models (500, 501, 502, 801, 1610, 1710, 1720) comprise a first machine learning model (1710) and a second machine learning model (1720),
wherein the first machine learning model (1710) is configured to predict resource allocation information based at least on the one or more scheduler-related metrics, the pathloss information, and the multiple-input and multiple-output rank of the user equipment (100) on at least one of the primary cell (121) or the one or more secondary cells (122),
wherein the second machine learning model (1720) is configured to predict the throughput of the user equipment (100) based at least on the resource allocation information from the first machine learning model (1710), the measurement information associated with the one or more sounding reference signals, the pathloss information, the multiple-input and multiple-output rank of the user equipment (100) on at least one of the primary cell (121) or the one or more secondary cells (122), the one or more power headroom reports, and the one or more beam identifiers.

8. The apparatus (2200) of claim 5, further being caused to:
transmit, to a near-real-time radio access network intelligent controller (800), the set of input data for determining the predicted throughput of the user equipment (100) on the primary cell (121) and on the one or more secondary cells (122),
wherein the near-real-time radio access network intelligent controller (800) comprises one or more machine learning models (801, 1610, 1710, 1720) configured to predict, based on the set of input data, a throughput of the user equipment (100) on the primary cell (121) and on the one or more secondary cells (122),
wherein the information indicating the predicted throughput is obtained by receiving the information from the near-real-time radio access network intelligent controller (800).

9. The apparatus (2200) of any of claims 2 to 4, further being caused to:
transmit, to a near-real-time radio access network intelligent controller (800), at least a part of the set of input data for determining the predicted throughput of the user equipment (100) on the primary cell (121) and on the one or more secondary cells (122),
wherein the near-real-time radio access network intelligent controller (800) comprises one or more machine learning models (801, 1610, 1710, 1720) configured to predict, based on at least the part of the set of input data, a throughput of the user equipment (100) on the primary cell (121) and on the one or more secondary cells (122); and
receive, from the near-real-time radio access network intelligent controller (800), based on transmitting at least the part of the set of input data, a message indicating the switching mode (1321, 1322, 1323) to be applied at the user equipment (100),
wherein the indication is transmitted to the user equipment (100) based on the message received from the near-real-time radio access network intelligent controller (800).

10. The apparatus (2200) of any of claims 2 to 4, further being caused to:
determine, during an initial period, based at least on the set of input data, a corresponding local throughput prediction of the user equipment (100) on the primary cell (121) and on the one or more secondary cells (122);
obtain measurement information indicating an observed throughput of the user equipment (100) on the primary cell (121) and on the one or more secondary cells (122);
transmit, to a near-real-time radio access network intelligent controller (800), the measurement information, the corresponding local throughput prediction, and the set of input data used to determine the corresponding local throughput prediction;
receive, from the near-real-time radio access network intelligent controller (800), a correction offset to be applied to one or more subsequent local throughput predictions;
apply the correction offset to a subsequent local throughput prediction for determining the predicted throughput of the user equipment (100) on the primary cell (121) and on the one or more secondary cells (122); and
determine the switching mode (1321, 1322, 1323) to be applied at the user equipment (100) based at least on the predicted throughput to which the correction offset is applied.

11. An apparatus (2100) comprising at least one processor (2110), and at least one memory (2120) storing instructions that, when executed by the at least one processor (2110), cause the apparatus (2100) at least to:
receive, from a network node (104, 105), an indication indicating a switching mode (1321, 1322, 1323) to be applied at the apparatus (2100) for uplink transmit switching,
wherein the switching mode (1321, 1322, 1323) is based at least on a predicted throughput of the apparatus (2100) on a primary cell (121) and on one or more secondary cells (122) of the apparatus (2100); and
apply the switching mode (1321, 1322, 1323) indicated by the indication.

12. A method comprising:
generating (1401) an indication indicating a switching mode (1321, 1322, 1323) to be applied at a user equipment (100) for uplink transmit switching,
wherein the switching mode (1321, 1322, 1323) is based at least on a predicted throughput of the user equipment (100) on a primary cell (121) and on one or more secondary cells (122) of the user equipment (100); and
transmitting (706, 1402) the indication to the user equipment (100).

13. A method performed by a user equipment (100), the method comprising:
receiving (1501), from a network node (104, 105), an indication indicating a switching mode (1321, 1322, 1323) to be applied at the user equipment (100) for uplink transmit switching,
wherein the switching mode (1321, 1322, 1323) is based at least on a predicted throughput of the user equipment (100) on a primary cell (121) and on one or more secondary cells (122) of the user equipment (100); and
applying (1502) the switching mode (1321, 1322, 1323) indicated by the indication.

14. A non-transitory computer readable medium comprising program instructions which, when executed by an apparatus (2200), cause the apparatus (2200) to perform at least the following:
generating an indication indicating a switching mode (1321, 1322, 1323) to be applied at a user equipment (100) for uplink transmit switching,
wherein the switching mode (1321, 1322, 1323) is based at least on a predicted throughput of the user equipment (100) on a primary cell (121) and on one or more secondary cells (122) of the user equipment (100); and
transmitting the indication to the user equipment (100).

15. A non-transitory computer readable medium comprising program instructions which, when executed by an apparatus (2100), cause the apparatus (2100) to perform at least the following:
receiving, from a network node (104, 105), an indication indicating a switching mode (1321, 1322, 1323) to be applied at the apparatus (2100) for uplink transmit switching,
wherein the switching mode (1321, 1322, 1323) is based at least on a predicted throughput of the apparatus (2100) on a primary cell (121) and on one or more secondary cells (122) of the apparatus (2100); and
applying the switching mode (1321, 1322, 1323) indicated by the indication.

16. A system comprising at least a network node (104, 105) and a user equipment (100); wherein the network node (104, 105) is configured to:
generate an indication indicating a switching mode (1321, 1322, 1323) to be applied at the user equipment (100) for uplink transmit switching,
wherein the switching mode (1321, 1322, 1323) is based at least on a predicted throughput of the user equipment (100) on a primary cell (121) and on one or more secondary cells (122) of the user equipment (100); and
transmit the indication to the user equipment (100);
wherein the user equipment (100) is configured to:
receive, from the network node (104, 105), the indication indicating the switching mode (1321, 1322, 1323) to be applied at the user equipment (100); and
apply the switching mode (1321, 1322, 1323) indicated by the indication.
